# EUROPEAN PATENT APPLICATION

(11) **EP 4 595 752 A1**
(43) Date of publication of application: **06.08.2025**
(21) Application number: 23872312.6
(22) Date of filing: 26.09.2023
(51) Int. Cl.: A01N 43/50, A01G 7/06, A01P 21/00

(54) **PLANT ENVIRONMENTAL STRESS TOLERANCE IMPROVEMENT AGENT AND ENVIRONMENTAL STRESS TOLERANCE IMPROVEMENT METHOD**

(30) Priority: 27.09.2022 JP 2022154079
(71) Applicant: Kureha Corporation, Chuo-ku Tokyo 103-8552 (JP)
(72) Inventor: KOSHIYAMA, Tatsuyuki, Tokyo 103-8552 (JP); HIGASHIYAMA, Yukihiro, Tokyo 103-8552 (JP)
(74) Representative: Hoefer & Partner Patentanwälte mbB
(86) International application number: PCT/JP2023/034858
(87) International publication number: WO 2024/071089

(57) **Abstract**

An agent for improving environmental stress tolerance in a plant, the agent including a compound represented by Formula (I) or its tautomer, or an agronomically acceptable salt thereof as an active ingredient: where in Formula (I), R¹ and R² each independently represent a hydrogen atom or an alkyl group having from 1 to 4 carbon atoms, and R³ to R⁵ each independently represent an alkyl group having from 1 to 4 carbon atoms.

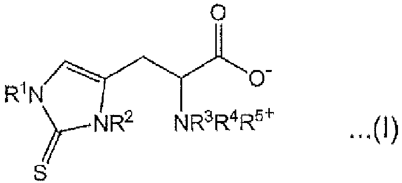

## Description

### [TECHNICAL FIELD]

The present invention relates to an agent for improving environmental stress tolerance in plants and a method for improving environmental stress tolerance.

### [BACKGROUND ART]

Environmental stresses such as global warming, drought and salt damage adversely affect the survival of plants and therefore cause serious damage in agriculture. Since it is difficult or expensive to remove environmental stresses, there has been a need for an agent for improving environmental stress tolerance in a wide range of plants.

Ergothioneine is known as a compound that may affect plant growth.

Patent Document 1 discloses a fertilizer containing ergothioneine and a culture product of microorganisms that can biosynthesize ergothioneine.

Patent Document 2 reports that the growth of plants is promoted or the yield is increased by applying ergothioneine alone to plants.

Patent Document 3 reports that application of a microorganism extract containing ergothioneine as a fertilizer improves nitrogenase activity.

Patent Document 4 and Patent Document 5 report that application of glycine betaine to plants controls stress and related conditions of plants and promotes growth of plants.

### [Citation List]

### [Patent Document]

Patent Document 1: JP 2018-130091 A
Patent Document 2: JP 2019-128636 A
Patent Document 3: European Patent Application Publication No. 3696154
Patent Document 4: WO 96/14749 A
Patent Document 5: WO 96/23413 A

### [SUMMARY OF INVENTION]

### [TECHNICAL PROBLEM]

Although various agents for improving environmental stress tolerance have been developed as described above, an agent for improving environmental stress tolerance that exhibits an improved effect is still required. However, Patent Documents 1, 2 and 3 do not clearly describe the effect of improving environmental stress tolerance in plants. Patent Documents 4 and 5 also describe 2-mercaptohistidine betaine (ergothioneine) in addition to glycine betaine. However, there is no example relating to ergothioneine, and the effect is not confirmed.

An object of an aspect of the present invention is to provide an agent for improving environmental stress tolerance and a method for improving environmental stress tolerance, which are capable of effectively improving environmental stress tolerance in plants.

### [SOLUTION TO PROBLEM]

In order to solve the above-described problem, an agent for improving environmental stress tolerance in a plant according to an aspect of the present invention includes a compound represented by Formula (I) or its tautomer, or an agronomically acceptable salt thereof as an active ingredient: 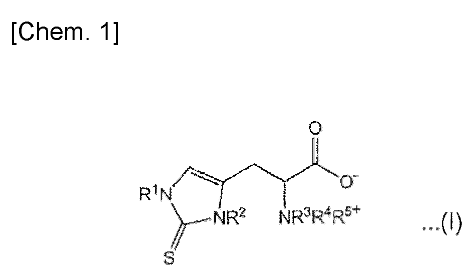 (In Formula (I), R¹ and R² each independently represent a hydrogen atom or an alkyl group having from 1 to 4 carbon atoms, and R³ to R⁵ each independently represent an alkyl group having from 1 to 4 carbon atoms).

In order to solve the above-described problem, a method for improving environmental stress tolerance in a plant according to an aspect of the present invention includes treating a plant with the above-described agent for improving environmental stress tolerance.

### [ADVANTAGEOUS EFFECTS OF INVENTION]

According to an aspect of the present invention, it is possible to provide an agent for improving environmental stress tolerance and a method for improving environmental stress tolerance, which are capable of effectively improving environmental stress tolerance in plants.

### [DESCRIPTION OF EMBODIMENTS]

[Agent for improving environmental stress tolerance]

### (Active ingredients)

An agent for improving environmental stress tolerance according to the present embodiment includes a compound represented by Formula (I) (hereinafter simply referred to as "compound (I)") or its tautomer, or an agronomically acceptable salt thereof as an active ingredient: 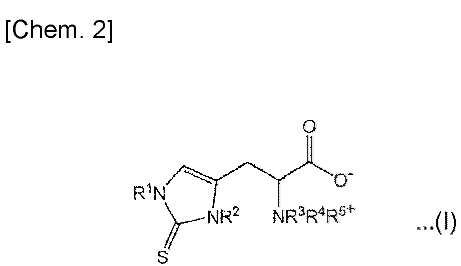 where in Formula (I), R¹ and R² each independently represent a hydrogen atom or an alkyl group having 1 to 4 carbon atoms. R³ to R⁵ each independently represent an alkyl group having 1 to 4 carbon atoms.

The alkyl group may be linear or branched, that is, may be a methyl group, an ethyl group, a propyl group, an isopropyl group, a butyl group, an isobutyl group, a sec-butyl group or a tert-butyl group.

At least one of R¹ and R² is preferably a hydrogen atom, and more preferably both are hydrogen atoms. When R¹ and R² are alkyl groups, they are preferably methyl groups, ethyl groups or propyl groups, more preferably methyl groups or ethyl groups, and even more preferably methyl groups.

R³ to R⁵ are each preferably independently a methyl group, an ethyl group or a propyl group, more preferably a methyl group or an ethyl group, and even more preferably a methyl group. At least one of R³ to R⁵ is preferably a methyl group, more preferably at least two are methyl groups, and even more preferably all are methyl groups.

"Its tautomer" refers to a tautomer of compound (I). Compound (I) has a tautomer when at least one of R¹ and R² is a hydrogen atom. More specifically, when R² is a hydrogen atom in Formula (I), the compound represented by Formula (II) below (hereinafter simply referred to as "compound (II)") can exist as a tautomer. In addition, when R¹ is a hydrogen atom in Formula (I), the compound represented by Formula (III) below (hereinafter simply referred to as "compound (III)") can exist as a tautomer. Compounds (II) and (III) are hereinafter collectively referred to simply as "tautomers". 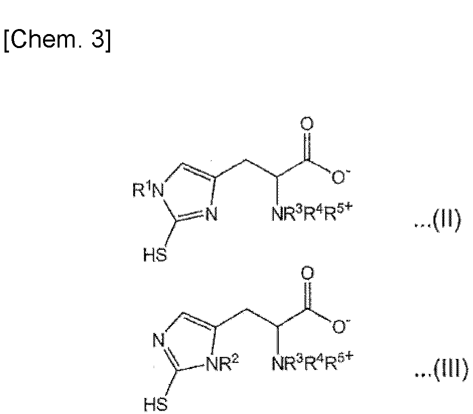 where in Formulas (II) and (III), R¹ to R⁵ are the same as R¹ to R⁵ in Formula (I).

The preferred compound as compound (I) or its tautomer is specifically ergothioneine, and L-(+)-ergothioneine is more preferred.

As these compounds, commercially available compounds may be used, or those synthesized by a technique well known to those skilled in the art, for example, a technique described in JP 2013-506706 T or JP 2006-160748 A may be used. Ergothioneine is known to be produced by bacteria and fungi. Examples of the production method using such a microorganism include the methods described in JP 2012-105618 A, JP 2014-223051 A, WO 2016/104437, WO 2016/121285, WO 2015/168112, and WO 2017/150304. As ergothioneine, a culture containing ergothioneine obtained from these microorganisms may be used as it is, or ergothioneine may be concentrated or purified before use.

"Agronomically acceptable" normally means that it is safe, non-toxic, and not undesired biologically or otherwise, but it is acceptable for agricultural chemicals, especially for agricultural chemicals that improve environmental stress tolerance in plants.

The "agronomically acceptable salt" of compound (I) or its tautomer is a salt that is agronomically acceptable as defined above, and refers to those capable of providing the action and effect of compound (I) or its tautomer. Examples of such salts include hydrates, solvates, acid addition salts, salts formed when the acidic proton present in compound (I) or its tautomer are replaced with metal ions, and salts formed when the acidic proton coordinates with an organic base or an inorganic base.

The acid addition salt may be formed with an inorganic acid or an organic acid. Examples of the inorganic acids include hydrochloric acid, hydrobromic acid, sulfuric acid, nitric acid, and phosphoric acid. Examples of the organic acids include acetic acid, benzenesulfonic acid, benzoic acid, camphorsulfonic acid, citric acid, ethanesulfonic acid, fumaric acid, glucoheptonic acid, gluconic acid, glutamic acid, glycolic acid, hydroxynaphthoic acid, 2-hydroxyethanesulfonic acid, lactic acid, maleic acid, malic acid, mandelic acid, methanesulfonic acid, muconic acid, 2-naphthalenesulfonic acid, propionic acid, salicylic acid, succinic acid, dibenzoyl-L-tartaric acid, tartaric acid, p-toluenesulfonic acid, trimethylacetic acid, and trifluoroacetic acid.

Examples of the metal ion capable of substituting the acidic proton present in compound (I) or its tautomer include an alkali metal ion, an alkaline earth metal ion, and an aluminum ion.

Examples of the organic base capable of coordinating with the acidic proton present in compound (I) or its tautomer include diethanolamine, ethanolamine, N-methylglucamine, triethanolamine, and tromethamine. Examples of the inorganic base include aluminum hydroxide, calcium hydroxide, potassium hydroxide, sodium carbonate, and sodium hydroxide.

The agent for improving environmental stress tolerance according to the present embodiment includes compound (I) or its tautomer, or an agronomically acceptable salt thereof as an active ingredient, thereby improving tolerance to environmental stress in a plant treated with the agent as compared with a plant not treated with the agent.

In the present specification, "tolerance to environmental stress is improved" means that a physiological disorder caused by environmental stress is suppressed in a plant treated with the agent for improving environmental stress tolerance according to the present embodiment as compared with a plant not treated with the agent.

Examples of the "index indicating that a physiological disorder caused by environmental stress has been suppressed" include an environmental stress suppressing rate. The "environmental stress suppressing rate" is a rate at which a physiological disorder occurring in a plant after the plant has grown for a predetermined period in an environment in which environmental stress is applied is suppressed by treating the plant with the agent for improving environmental stress tolerance according to the embodiment as compared with a plant not treated with the agent. For example, in an environment in which environmental stress is applied, when the physiological disorder caused in a plant not treated with the agent for improving environmental stress tolerance is set to 100% and the physiological disorder caused in a plant treated with the agent for improving environmental stress tolerance is set to 20%, the environmental stress suppressing rate is 80%. Regarding the "environmental stress suppressing rate", the expression "tolerance to environmental stress is improved" means that the environmental stress suppressing rate is high.

Examples of the "index of physiological disorder" include, for example, death, chlorosis (whitening or yellowing), necrosis, wilting, and the like in plants, for example, death, chlorosis (whitening or yellowing), necrosis, wilting, and the like in leaves, but are not limited to those, and decreases in plant height, root length, number of flowers, number of fruits, seed yield, and the like.

As an example, the "plant mortality rate" is a percentage of the number of plants that die after growing the plants for a predetermined period under predetermined conditions to the number of plants to be tested, and as an example, the mortality rate is 80% when 80 plants die after growing 100 plants for a predetermined period under predetermined conditions. Regarding the "plant mortality rate", the expression "tolerance to environmental stress is improved" means that a plant treated with the agent for improving environmental stress tolerance according to the present embodiment has a lower mortality rate in an environment where environmental stress is applied than a plant not treated with the agent.

As an example, the "leaf mortality rate" is a percentage of the number of leaves that die after growing a plant to be tested for a predetermined period under predetermined conditions to the number of leaves of the plant, and as an example, the leaf mortality rate is 80% when 8 leaves die out of 10 leaves after growing the plant for a predetermined period under predetermined conditions. Regarding the "leaf mortality rate", the expression "tolerance to environmental stress is improved" means that a plant treated with the agent for improving environmental stress tolerance according to the present embodiment has a lower mortality rate in an environment where environmental stress is applied than a plant not treated with the agent.

As an example, the "leaf whitening rate" is a percentage of the number of leaves that whiten after growing a plant to be tested for a predetermined period under predetermined conditions to the number of leaves of the plant, and as an example, the leaf whitening rate is 80% when 8 leaves whiten out of 10 leaves after growing the plant for a predetermined period under predetermined conditions. Regarding the "leaf whitening rate", the expression "tolerance to environmental stress is improved" means that a plant treated with the agent for improving environmental stress tolerance according to the present embodiment has a lower leaf whitening rate in an environment where environmental stress is applied than a plant not treated with the agent.

As an example, the "leaf necrotizing rate" is a percentage of the area of leaves that necrotize after growing a plant to be tested for a predetermined period under predetermined conditions to the total leaf area of the plant, and as an example, the leaf necrotizing rate is 80% when the necrotized leaf area is 80 cm² of the total leaf area of 100 cm² after growing the plant for a predetermined period under predetermined conditions. Regarding the "leaf necrotizing rate", the expression "tolerance to environmental stress is improved" means that a plant treated with the agent for improving environmental stress tolerance according to the present embodiment has a lower leaf necrotizing rate in an environment where environmental stress is applied than a plant not treated with the agent.

As an example, the "leaf wilting rate" is a percentage of the number of leaves that wilt after growing a plant to be tested for a predetermined period under predetermined conditions to the number of leaves of the plant, and as an example, the leaf wilting rate is 80% when 8 leaves wilt out of 10 leaves after growing the plant for a predetermined period under predetermined conditions. Regarding the "leaf wilting rate", the expression "tolerance to environmental stress is improved" means that a plant treated with the agent for improving environmental stress tolerance according to the present embodiment has a lower leaf wilting rate in an environment where environmental stress is applied than a plant not treated with the agent.

Regarding "plant height" as another example, the expression "tolerance to environmental stress is improved" means that a plant treated with the agent for improving environmental stress tolerance according to the present embodiment has a higher plant height in an environment where environmental stress is applied than a plant not treated with the agent. In addition, regarding "root length" as another example, the expression "tolerance to environmental stress is improved" means that a plant treated with the agent for improving environmental stress tolerance according to the present embodiment has a longer root length in an environment where environmental stress is applied than a plant not treated with the agent. Regarding the "number of flowers" as another example, the expression "tolerance to environmental stress is improved" means that the number of flowers in a plant treated with the agent for improving environmental stress tolerance according to the present embodiment is larger than that in a plant not treated with the agent in an environment where environmental stress is applied. Regarding the "number of fruits" as another example, the expression "tolerance to environmental stress is improved" means that the number of fruits in a plant treated with the agent for improving environmental stress tolerance according to the present embodiment is larger than that in a plant not treated with the agent under an environment in which environmental stress is applied. Regarding the "seed yield" as another example, the expression "tolerance to environmental stress is improved" means that the seed yield of a plant treated with the agent for improving environmental stress tolerance according to the present embodiment is higher than that of a plant not treated with the agent in an environment where environmental stress is applied.

In particular, a preferable embodiment is an agent for improving environmental stress tolerance for suppressing death, chlorosis (whitening or yellowing), necrosis, and wilting of plants or leaves due to environmental stress.

The term "environmental stress" as used herein refers to a factor that inhibits normal growth among environmental factors to which a plant may be subjected. Examples thereof include high temperature stress, low temperature stress, freezing stress, salt stress, excessive nutrient stress, drying stress, excessive water stress, ultraviolet stress, weak light stress, and intense light stress.

These factors are basically conditions under which normal growth is difficult without treatment with the agent for improving environmental stress tolerance according to the present embodiment. The term "normal growth" as used herein refers to a degree of growth in a state in which these factors do not affect the growth and the plant is not treated with the agent for improving environmental stress tolerance according to the present embodiment. The expression "normal growth is difficult" includes not only the case where the growth is difficult but also the case where the degree of growth is worse than that in the normal growth.

The agent for improving environmental stress tolerance according to the present embodiment preferably includes compound (I) or an agronomically acceptable salt thereof as an active ingredient. The agent for improving environmental stress tolerance according to the present embodiment may include a plurality of compounds among compound (I) and its tautomer, or an agronomically acceptable salt thereof as an active ingredient.

Normally, in a solution, compound (I) and compound (II) or (III) can exist in equilibrium. The ratio of compound (I) to compound (II) or (III) can vary depending on the solvent, temperature, or pH.

### (Applicable plant)

The agent for improving environmental stress tolerance according to the present embodiment typically exhibits an environmental stress tolerance improving effect on all plants, and examples of applicable plants include the following: Poaceae such as rice, wheat, barley, rye, oats, triticale, corn, sorghum, sugar cane, turf, bentgrass, bermudagrass, fescue, and ryegrass; Legumes such as soybean, peanut, kidney bean, pea, adzuki bean, and alfalfa; Convolvulaceae such as sweet potato; Solanaceae such as capsicum, sweet pepper, tomato, eggplant, potato, and tobacco; Polygonaceae such as buckwheat; Asteraceae such as sunflower; Araliaceae such as ginseng; Brassicaceae such as rapeseed, broccoli, Chinese cabbage, turnip, cabbage, arugula, Japanese radish, and radish; Chenopodiaceae such as sugar beet; Malvaceae such as cotton; Rubiaceae such as coffee tree; Sterculiaceae such as cacao; Theaceae such as tea; Cucurbitaceae such as watermelon, melon, cucumber, and pumpkin; Liliaceae such as onion, leek, and garlic; Rosaceae such as strawberry, apple, almond, apricot, plum, yellow peach, Japanese plum, peach, and pear; Apiaceae such as carrot; Araceae such as taro; Anacardiaceae such as mango; Bromeliaceae such as pineapple; Caricaceae such as papaya; Ebenaceae such as persimmon; Ericaceae such as blueberry; Juglandaceae such as pecan; Musaceae such as banana; Oleaceae such as olive; Palmae such as coconut and date; Rutaceae such as mandarin orange, orange, grapefruit, and lemon; Vitaceae such as grape; flowers and ornamental plants; trees other than fruit trees; and other ornamental plants.

Other examples include wild plants, cultivars, plants and cultivars bred by conventional hybridizing or plasmogamy, and genetically recombinant plants and cultivars obtained by gene manipulation. Examples of genetically recombined plants and cultivars include herbicide-tolerant crops, pest-resistant crops in which an insecticidal protein-producing gene has been recombined, pathogen-resistant crops in which a pathogen resistance derivative-producing gene has been recombined, taste-improved crops, yield-improved crops, preservation-improved crops, and yield-improved crops. Examples of genetically recombined cultivar that has been approved in each country include those stored in the database of the International Service for the Acquisition of Agri-biotech Applications (ISAAA). Specific examples include ones including registered trademark such as AgriSure, AgriSure 3000 GT, AgriSure 3122 E-Z Refuge, AgriSure 3122 Refuge Renew, AgriSure Artesian 3030 A, AgriSure Artesian 3011 A, AgriSure Duracade, AgriSure Duracade 5222 E-Z Refuge, AgriSure GT, AgriSure GT/CB/LL, AgriSure RW, AgriSure Viptera 3110, AgriSure Viptera 3111, AgriSure Viptera 3220 E-Z Refuge, AgriSure Viptera 3220 Refuge Renew, BiteGard, Bollgard, Bollgard II, Bollgard II, Bollgard II/Roundup Ready, Bollgard 3 XtendFlex Cotton, Bollgard Cotton, Bollgard/Roundup Ready Cotton, B.t., B.t/BXN Cotton, B.t. Maize, BtXtra, BXN, BXN Canola, BXN Cotton, Clearfield, DroughtGard, Enlist, Enlist Cotton, Enlist WideStrike 3 Cotton, Genuity, Genuity Bollgard II XtendFlex, Genuity Intacta RR2 Pro, Genuity SmartStax, Genuity SmartStax RIB Complete, Genuity VT Double Pro, Genuity VT Double Pro RIB Complete, Genuity VT Triple Pro, Genuity VT Triple Pro RIB Complete, GlyTol, GlyTol Cotton, Herculex, Herculex 1, Herculex RW, Herculex XTRA, IMI, IMI Canola, InVigor, KnockOut, Liberty Link, Liberty Link Conola, Liberty Link cotton, NatureGard, Newleaf, Nucotn, Optimum, Optimum AcreMax, Optimum AcreMax I, Optimum AcreMax-R, Optimum AcreMax RW, Optimum AcreMax RW-R, Optimum AcreMax Xtra-R, Optimum AcreMax Xtreme-R, Optimum AcreMax Xtreme, Optimum Intrasect, Optimum Intrasect Xtra, Optimum Intrasect Xtreme, Optimum Leptra, Optimum TRIsect, Poast Compatible, Powercore, Powercore Corn, Powercore Corn Refuge Advanced, Protecta, Roundup Ready, Roundup Ready 2, Roundup Ready Conola, Roundup Ready Cotton, Roundup Ready Xtend, Roundup Ready/YieldGard, RR Flex/Bollgard II, SCS, SmartStax, SmartStax Refuge Advanced, StarLink, Twinlink, VipCot, VipCot Cotton, WideStrike, WideStrike 3, YieldGard, YieldGard Corn Borner, YieldGard Rootworm, YieldGard Plus, and YieldGard VT Triple.

### (Formulation)

The agent for improving environmental stress tolerance in the present embodiment is typically used by mixing compound (I) or a tautomer thereof as an active ingredient, or a mixture thereof with a carrier, a surfactant, other formulation aids, or the like, and formulating the mixture into various forms such as dustable powders, granules, dust-granule mixtures, wettable powders, water soluble powders, emulsifiable concentrates, soluble concentrates, oil or oil miscible liquids, aerosols, microcapsule suspensions, pastes, liniments, smoke generators, gas generators, and ultra-low volume formulations.

Examples of the carrier to be used as a formulation aid include solid carriers and liquid carriers. Examples of the solid carrier include those used as powder carriers and granular carriers, such as minerals such as clay, talc, diatomaceous earth, zeolite, montmorillonite, bentonite, kaolinite, kaolin, pyrophyllite, agalmatolite, acid clay, activated clay, attapulgite, attapulgite clay, limestone, calcite, marble, vermiculite, perlite, pumice, silica stone, silica sand, sericite and porcelain stone; synthetic organic substances such as urea; salts such as calcium carbonate, sodium carbonate, magnesium carbonate, sodium sulfate, ammonium sulfate, potassium chloride, slaked lime, and baking soda; synthetic inorganic substances such as amorphous silica (e.g., white carbon and fumed silica) and titanium dioxide; plant carriers such as wood flour, corn stalk (cob), walnut shell (nut shell), fruit core, rice hull, coconut shell, sawdust, bran, soy flour, powdered cellulose, starch, dextrin, and sugars (e.g., lactose and sucrose); and various polymeric carriers such as crosslinked lignin, cation gel, gelatin gelated by heat or a polyvalent metal salt, water-soluble polymer gel (e.g., agar), chlorinated polyethylene, chlorinated polypropylene, polyvinyl acetate, polyvinyl chloride, ethylene-vinyl acetate copolymers, and urea-aldehyde resins.

Examples of the liquid carrier include aliphatic solvents such as paraffins (normal paraffin, iso-paraffin, naphthene); aromatic solvents such as xylene, alkylbenzene, alkylnaphthalene, and solvent naphtha; mixed solvents such as kerosene; machine oils such as refined high-boiling point aliphatic hydrocarbons; alcohols such as methanol, ethanol, isopropanol, butanol, and cyclohexanol; polyhydric alcohols such as ethylene glycol, diethylene glycol, propylene glycol, dipropylene glycol, hexylene glycol, polyethylene glycol, and polypropylene glycol; polyhydric alcohol derivatives such as propylene glycol ether; ketones such as acetone, acetophenone, cyclohexanone, methylcyclohexanone, and γ-butyrolactone; esters such as fatty acid methyl ester (coconut oil fatty acid methyl ester), ethylhexyl lactate, propylene carbonate, dibasic acid methyl ester (succinic acid dimethyl ester, glutamic acid dimethyl ester, and adipic acid dimethyl ester); nitrogen-containing solvents such as N-alkylpyrrolidones and acetonitrile; sulfur-containing solvents such as dimethyl sulfoxide; oils and fats such as coconut oil, soybean oil, and rapeseed oil; amide solvents such as dimethylformamide, N,N-dimethyloctaneamide, N,N-dimethyldecaneamide, 5-(dimethylamino)-2-methyl-5-oxo-valeric acid methyl ester, and N-acylmorpholine-based solvents (e.g., CAS No. 887947-29-7); and water.

Examples of the surfactant used as the formulation aid include nonionic surfactants, anionic surfactants, cationic surfactants, amphoteric surfactants, silicone surfactants, fluorosurfactants, and biosurfactants. Examples of the nonionic surfactants include sorbitan fatty acid ester, polyoxyethylene sorbitan fatty acid ester, sucrose fatty acid ester, polyoxyethylene fatty acid ester, polyoxyethylene resin acid ester, polyoxyethylene fatty acid diester, polyoxyethylene alkyl ether, polyoxyethylene alkylphenyl ether, polyoxyethylene dialkyl phenyl ether, polyoxyethylene alkyl phenyl ether formalin condensate, polyoxyethylene/polyoxypropylene block polymer, alkyl polyoxyethylene/polyoxypropylene block polymer ether, alkyl phenyl polyoxyethylene/polyoxypropylene block polymer ether, polyoxyethylene alkylamine, polyoxyethylene fatty acid amide, polyoxyethylene fatty acid bisphenyl ether, polyoxyethylene benzylphenyl (or phenylphenyl) ether, polyoxyethylene styrylphenyl (or phenylphenyl) ether, polyoxyethylene castor oil, polyoxyethylene hydrogenated castor oil, and alkyl glycosides.

Examples of the anionic surfactants include sulfates such as alkyl sulfates, polyoxyethylene alkyl ether sulfates, polyoxyethylene alkylphenyl ether sulfates, polyoxyethylene benzyl (or styryl) phenyl (or phenylphenyl) ether sulfates, polyoxyethylene/polyoxypropylene block polymer sulfates; sulfonates such as paraffin (alkane) sulfonates, α-olefin sulfonates, dialkyl sulfosuccinates, alkylbenzene sulfonates, mono- or dialkyl naphthalene sulfonates, naphthalene sulfonate-formalin condensates, alkyl diphenyl ether disulfonates, lignin sulfonates, polyoxyethylene alkyl phenyl ether sulfonates, and polyoxyethylene alkyl ether sulfosuccinic acid half esters; carboxylates such as fatty acids, resin acids, polycarboxylic acids, alkyl ether carboxylates, alkenyl succinic acids, N-acylamino acids, and naphthenic acids; and phosphates such as polyoxyethylene alkyl ether phosphates, polyoxyethylene mono- or dialkyl phenyl ether phosphates, polyoxyethylene benzyl (or styryl) phenyl (or phenylphenyl) ether phosphates, polyoxyethylene/polyoxypropylene block polymer phosphates, and alkyl phosphates.

Examples of the cationic surfactants include salts of amines such as alkylamines and alkyl pentamethyl propylene diamines; salts of ammoniums such as alkyltrimethylammoniums, methyl polyoxyethylene alkylammoniums, alkyl pyridiniums, mono- or di-alkyl methylated ammoniums, alkyl dimethyl benzalkoniums, and benzethonium (octylphenoxyethoxy ethyl dimethyl benzylammonium).

Examples of the amphoteric surfactant include dialkyldiamino ethyl betaine, alkyldimethyl benzyl betaine, and lecithin (e.g., phosphatidylcholine and phosphatidylethanolamine).

Examples of the silicone surfactant include trisiloxane ethoxylate.

Examples of the fluorosurfactant include perfluoroalkyl carboxylates, perfluoroalkyl sulfonates, and perfluoroalkyl trimethylammonium salts.

Examples of the biosurfactant include sophorolipids, rhamnolipids, trehalose lipids, mannosyl alditol lipids, cellobiose lipids, glucose lipids, oligosaccharide fatty acid esters, spiculisporic acids, corynomycolic acids, agaricic acids, surfactins, serrawettins, viscosins, lichenysins, arthrofactins, emulsans, and alasans.

Examples of other formulation aids include inorganic salts used as pH adjusters (e.g., sodium and potassium); water-soluble salts such as common salt; xanthan gum, guar gum, carboxymethyl cellulose, polyvinylpyrrolidone, carboxyvinyl polymers, acrylic polymers, polyvinyl alcohols, starch derivatives, water-soluble polymers (e.g., polysaccharides), alginic acid and salts thereof, which are used as thickeners; metal stearates, sodium tripolyphosphate, and sodium hexametaphosphate, which are used as disintegrating dispersants; benzoic acid and salts thereof, sorbic acid and salts thereof, propionic acid and salts thereof, p-hydroxybenzoic acid, methyl p-hydroxybenzoate, 1,2-benzothiazol-3-one, which are used as preservatives; sodium polyphosphate, sodium polyacrylate, sodium lignosulphonate, sodium citrate, sodium gluconate/glucoheptonate, ethylene diamine tetraacetic acid and disodium and ammonium salts thereof, which are used as sequesterants; pigments and dyes used as colorants, fluorine-based defoamers, silicone-based defoamers, and ethylene oxide/propylene oxide copolymers, which are used as defoamers; phenol-based antioxidants, amine-based antioxidants, sulfur-based antioxidants, and phosphoric acid-based antioxidants, which are used as antioxidants; salicylic acid-based UV absorbers and benzophenone-based UV absorbers, which are used as UV absorbers; quicklime and magnesium oxide, which are used as desiccants; and other adjuvants and chemical damage reducers and deterioration inhibitors.

Some formulations are used as they are and some are diluted with a diluent such as water to a predetermined concentration before use. The concentration of compound (I) when diluted before use is preferably in the range from 0.0001 to 1 wt.%. The same applies to the tautomers of compound (I).

These formulations are prepared so that compound (I) is contained as an active ingredient in an amount of 0.1 to 90 wt.%, and more preferably 0.2 to 50 wt.%. The amount of compound (I) used is from 0.005 to 50 kg, and more preferably from 0.03 to 30 kg per 1 ha of agricultural and horticultural land such as fields, rice fields, orchards, and greenhouses. The same applies to the tautomers of compound (I). Since the concentration and quantity used differ depending on the form of the agent, time of use, usage method, usage location, target crops and the like, they may be increased or decreased without being limited to the above range.

### (Other active ingredients)

The agent for improving environmental stress tolerance in the present embodiment may be used in combination with other known active ingredients to enhance the performance as an agent for improving environmental stress tolerance, or an effect different from the improvement of environmental stress tolerance may imparted to the agent and used. Examples of the other known active ingredients include active ingredients contained in known agents for improving environmental stress tolerance, known plant growth regulators, fungicides, insecticides, miticides, nematicides, and herbicides.

Examples of the active ingredient of the known agent for improving environmental stress tolerance include seaweed extract, corn extract, microalgae, mycorrhizal fungus, humic acid, fulvic acid, oxidized glutathione, L-proline, glycine betaine, 5-aminolevulinic acid, 2-hexenal, trehalose, silicic acid, nicotinic acid, acetic acid, and ethanol.

Examples of the active ingredients of known plant growth regulators include aminoethoxyvinylglycine, chlormequat, chlorpropham, cyclanilide, dikegulac, daminozide, ethephon, flurprimidol, flumetralin, forchlorfenuron, gibberellin, mepiquat chloride, methylcyclopropene, benzylaminopurine, paclobutrazol, prohexadione, thidiazuron, tributylphosphorotrithioate, trinexapac-ethyl, uniconazole, sodium 1-naphthaleneacetate, 1-naphthylacetamide, 1-methylcyclopropene, 4-chlorophenoxyacetic acid (4-CPA), ethyl 2-methyl-4-chlorophenoxybutyrate (MCPB), isoprothiolane, indole butyric acid, ethychlozate, calcium formate, chlormequat, choline, cyanamide, dichlorprop, decyl alcohol, sorbitan trioleate, nicosulfuron, pyraflufen-ethyl, butralin, prohydrojasmon, anisiflupurin, and pendimethalin.

Examples of the active ingredients suitable for use in fungicides include nucleic acids metabolism inhibitors, fungicides acting on cytoskelton and motor proteins, respiration inhibitors, amino acids and protein synthesis inhibitors, signal transduction inhibitors, lipid synthesis or transport/membrane integrity or function inhibitors, sterol biosynthesis inhibitors, cell wall biosynthesis inhibitors, melanin synthesis inhibitors, host plant defence inducers, chemical multi-site inhibitors, and biologicals with multiple modes of action.

Examples of the nucleic acids metabolism inhibitors include benalaxyl, benalaxyl-M or kiralaxyl, furalaxyl, metalaxyl, metalaxyl-M or mefenoxam, ofurace, oxadixyl, bupirimate, dimethirimol, ethirimol, hymexazole, octhilinone, and oxolinic acid.

Examples of the fungicides acting on cytoskelton and motor proteins include benomyl, carbendazim, fuberidazole, thiabendazole, thiophanate, thiophanate-methyl, diethofencarb, ethaboxam, pencycuron, zoxamide, fluopicolide, fluopimomide, phenamacril, metrafenone, and pyriofenone.

Examples of the respiration inhibitors include diflumetorim, fenazaquin, tolfenpyrad, benodanil, benzovindiflupyr, bixafen, boscalid, carboxin, fenfuram, flubeneteram, fluindapyr, fluopyram, flutolanil, fluxapyroxad, furametpyr, inpyrfluxam, isofetamid, isoflucypram, isopyrazam, mepronil, oxycarboxin, penflufen, penthiopyrad, pydiflumetofen, pyrapropoyne, pyraziflumid, sedaxane, thifluzamide, azoxystrobin, coumoxystrobin, dimoxystrobin, enestrobin, enoxastrobin, famoxadone, fenamidone, fenaminstrobin, flufenoxystrobin, fluoxastrobin, kresoxim-methyl, mandestrobin, metominostrobin, metyltetraprole, orysastrobin, picoxystrobin, pyraclostrobin, pyrametostrobin, pyraoxystrobin, pyribencarb, triclopyricarb, trifloxystrobin, amisulbrom, cyazofamid, fenpicoxamid, florylpicoxamid, metarylpicoxamid, binapacryl, dinocap, fluazinam, meptyldinocap, fentin acetate, fentin chloride, fentin hydroxide, silthiofam, and ametoctradin.

Examples of the amino acids and protein synthesis inhibitors include cyprodinil, mepanipyrim, pyrimethanil, blasticidin-S, kasugamycin, streptomycin, and oxytetracycline.

Examples of the signal transduction inhibitors include proquinazid, quinoxyfen, fludioxonil, chlozolinate, dimethachlone, fenpiclonil, iprodione, procymidone, and vinclozolin.

Examples of the lipid synthesis or transport/membrane integrity or function inhibitors include edifenphos (EDDP), iprobenfos (IBP), isoprothiolane, pyrazophos, biphenyl, chloroneb, dicloran (CNA), etridiazole, quintozene (PCNB), tecnazene (TCNB), tolclofos-methyl, iodocarb, propamocarb, prothiocarb, extracts of Melaleuca alternifolia (tea tree), plant oil mixtures (eugenol, geraniol, thymol), natamycin (pimaricin), fluoxapiprolin, and oxathiapiprolin.

Examples of the sterol biosynthesis inhibitors include azaconazole, bitertanol, bromuconazole, cyproconazole, difenoconazole, diniconazole, epoxiconazole, etaconazole, fenbuconazole, fluoxytioconazole, fluquinconazole, flusilazole, flutriafol, hexaconazole, imazalil, imibenconazole, ipconazole, ipfentrifluconazole, mefentrifluconazole, metconazole, myclobutanil, oxpoconazole, pefurazoate, penconazole, prochloraz, propiconazole, prothioconazole, simeconazole, tebuconazole, tetraconazole, triadimefon, triadimenol, triflumizole, triticonazole, fenarimol, nuarimol, pyrifenox, pyrisoxazole, triforine, methyl (2RS)-2-[2-chloro-4-(4-chlorophenoxy)phenyl]-2-hydroxy-3-(1H-1,2,4-triazol-1-yl)propanoate, 1-((1H-1,2,4-triazol-1-yl)methyl)-5-(4-chlorobenzyl)-2-(chloromethyl)-2-methylcyclopentan-1-ol, methyl-2-((1H-1,2,4-triazol-1-yl)methyl)-3-(4-chlorobenzyl)-2-hydroxy-1-methylcyclopentane-1-carboxylate, aldimorph, dodemorph, fenpropimorph, tridemorph, fenpropidin, piperalin, spiroxamine, fenhexamid, fenpyrazamine, pyributicarb, naftifine, and terbinafine.

Examples of the cell wall biosynthesis inhibitors include polyoxin, benthiavalicarb (benthiavalicarb-isopropyl), dimethomorph, flumorph, iprovalicarb, mandipropamid, pyrimorph, and valifenalate.

Examples of the melanin synthesis inhibitors include fthalide, pyroquilon, tricyclazole, carpropamid, diclocymet, fenoxanil, and tolprocarb.

Examples of the host plant defence inducers include acibenzolar-S-methyl, probenazole, tiadinil, isotianil, laminarin, Reynoutria sachalinensis extracts, Bacillus mycoides isolate J, cell wall of Saccharomyces cerevisiae strain LAS117, fosetyl (fosetyl-aluminum, fosetyl potassium, fosetyl sodium), phosphorous acid and salts thereof, and dichlobentiazox.

Examples of the chemical multi-site inhibitors include ferbam, mancozeb, maneb, metiram, propineb, thiram, zinc thiazole, zineb, ziram, amobam, anilazine, dithianon, dichlofluanid, tolylfluanid, guazatine, iminoctadine acetate, iminoctadine albesilate, copper or various copper salts (e.g., copper oxychloride, copper(II) hydroxide, copper hydroxide sulfate, copper sulfate, organocopper (oxine-copper), nonyl phenol sulfonic acid copper, DBEDC), sulfur, captan, captafol, folpet, chlorothalonil (TPN), quinoxaline (chinomethionat), fluoroimide, and methasulfocarb.

Examples of the biopesticides/agrochemicals of biological origin with multiple modes of action include Bacillus subtilis strain AFS032321, Bacillus amyloliquefaciens strain QST713, Bacillus amyloliquefaciens strain FZB24, Bacillus amyloliquefaciens strain MBI600, Bacillus amyloliquefaciens strain D747, Bacillus amyloliquefaciens strain F727, Clonostachys rosea strain CR-7, Gliocladium catenulatum strain J1446, Pseudomonas chlororaphis strain AFS009, Streptomyces griseoviridis strain K61, Streptomyces lydicus strain WYEC108, Trichoderma atroviride strain I-1237, Trichoderma atroviride strain LU132, Trichoderma atroviride strain SC1,Trichoderma asperellum strain T34, extracts from Swinglea glutinosa and extracts from the cotyledons of lupine plantlets (BLAD) lupin saplings.

Examples of other compounds for use in fungicides include chloroinconazide, seboctylamine, flumetylsulforim, flufenoxadiazam, cyflufenamid, cymoxanil, diclomezine, dipymetitrone, dodine, fenitropan, ferimzone, flusulfamide, flutianil, harpin, inorganic salts (hydrogencarbonates (sodium hydrogencarbonate, potassium hydrogencarbonate), potassium carbonate), ipflufenoquin, KINOPROL, materials of biological origin, machine oils, organic oils, picarbutrazox, pyridachlometyl, quinofumelin, tebufloquin, tecloftalam (bactericides), triazoxide, validamycin, aminopyrifene, and shiitake mycelium mycelia extracts.

Examples of the active ingredients suitable for use in insecticides include acetylcholinesterase (AChE) inhibitors, GABA-gated chloride channel blockers, sodium channel modulators, nicotinic acetylcholine receptor (nAChR) competitive modulators, nicotinic acetylcholine receptor (nAChR) allosteric modulators, glutamate-gated chloride channel (GluCl) allosteric modulators, juvenile hormone mimics, miscellaneous non-specific (multi-site) inhibitors, chordotonal organ TRPV channel modulators, mite growth inhibitors affecting CHS1, microbial disruptors of insect midgut membranes, inhibitors of mitochondrial ATP synthase, uncouplers of oxidative phosphorylation via disruption of the proton gradient, nicotinic acetylcholine receptor (nAChR) channel blockers, inhibitors of chitin biosynthesis affecting CHS1, inhibitors of chitin biosynthesis (type 1), molting disruptors (Dipteran), ecdysone receptor agonists, octopamine receptor agonists, mitochondrial complex III electron transport inhibitors, mitochondrial complex I electron transport inhibitors (METI), voltage-dependent sodium channel blockers, inhibitors of acetyl CoA carboxylase, mitochondrial complex IV electron transport inhibitors, mitochondrial complex II electron transport inhibitors, ryanodine receptor modulators, chordotonal organ modulators, GABA-gated chloride channel allosteric modulators, and baculoviruses.

Examples of the acetylcholinesterase (AChE) inhibitors include alanycarb, aldicarb, bendiocarb, benfuracarb, butocarboxim, butoxycarboxim, carbaryl (NAC), carbofuran, carbosulfan, ethiofencarb, fenobucarb (BPMC), fenothiocarb, formetanate, furathiocarb, isoprocarb (MIPC), methiocarb, methomyl, metolcarb (MTMC), oxamyl, pirimicarb, propoxur (PHC), thiodicarb, thiofanox, triazamate, trimethacarb, XMC, xylylcarb (MPMC), acephate, azamethiphos, azinphos-ethyl, azinphos-methyl, cadusafos, chlorethoxyfos, chlorfenvinphos (CVP), chlormephos, chlorpyrifos, chlorpyrifos-methyl, coumaphos, cyanophos (CYAP), demeton-S-methyl, diazinon, dichlorvos (DDVP), dicrotophos, dimethoate, dimethylvinphos, ethylthiomethon (disulfoton), EPN, ethion, ethoprophos, famphur, fenamiphos, fenitrothion (MEP), fenthion (MPP), fosthiazate, heptenophos, imicyafos, isofenphos, isopropyl O-(methoxyaminothiophosphoryl)salicylate, isoxathion, malathon (malathion), mecarbam, methamidophos, methidathion (DMTP), mevinphos, monocrotophos, naled (BRP), omethoate, oxydemeton-methyl, parathion, methyl parathion (parathion-methyl), phenthoate (PAP), phorate, phosalone, phosmet (PMP), phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos (CVMP), thiometon, triazophos, trichlorfon (DEP), and vamidothion.

Examples of the GABA-gated chloride channel blockers include chlordane, benzoepin (endosulfan), dienochlor, ethiprole, fipronil, pyriprole, and nicofluprole.

Examples of the sodium channel modulators include acrinathrin, allethrin (d-cis-trans-allethrin, d-trans-allethrin), bifenthrin, bioallethrin (bioallethrin, S-cyclopentenyl-isomers), bioresmethrin, chloroprallethrin, chlorfenson, cycloprothrin, cyfluthrin (cyfluthrin, β-isomers), cyhalothrin (cyhalothrin, λ-, γ-isomers), cypermethrin (cypermethrin, α-, β-, θ-, ζ-isomers), cyphenothrin [(1R)-trans-isomers], deltamethrin, dimefluthrin, empenthrin [(EZ)-(1R)-isomers], esfenvalerate, etofenprox, fenpropathrin, fenvalerate, flubrocythrinate, flucythrinate, flumethrin, fluvalinate (τ-fluvalinate), halfenprox, imiprothrin, kadethrine, metofluthrin, momfluorothrin, epsilon-metofluthrin, epsilon-momfluorothrin, permethrin, phenothrin [(1R)-trans isomer], prallethrin, profluthrin, pyrethrin, resmethrin, silafluofen, tefluthrin, phthalthrin (tetramethrin), tetramethrin [(1R)-isomers], tralomethrin, transfluthrin, DDT, methoxychlor, aldrin, dieldrin, and lindane (lindene).

Examples of the nicotinic acetylcholine receptor (nAChR) competitive modulators include acetamiprid, clothianidin, dinotefuran, imidacloprid, nitenpyram, thiacloprid, thiamethoxam, nicotine sulfate (nicotine), sulfoxaflor, flupyradifurone, dicloromezotiaz, fenmezoditiaz, and triflumezopyrim.

Examples of the nicotinic acetylcholine receptor (nAChR) allosteric modulators include spinetoram, spinosad, flupyrimin, and GS-omega/kappa HXTX-Hv1a peptide.

Examples of the glutamate-gated chloride channel (GluCl) allosteric modulators include abamectin, emamectin benzoate, lepimectin, and milbemectin.

Examples of the juvenile hormone mimics include hydroprene, kinoprene, methoprene, fenoxycarb, and pyriproxyfen.

Examples of miscellaneous nonspecific (multi-site) inhibitors include methyl bromide, other alkyl halides, chloropicrin, sodium aluminum fluoride, sulfuryl fluoride, borax, boric acid, disodium octaborate, sodium metaborate, tartar emetic, dazomet, carbam (metam-ammonium), metam-sodium (carbam sodium), and methyl isothiocyanate.

Examples of the chordotonal organ TRPV channel modulators include pymetrozine, pyrifluquinazon, and afidopyropen.

Examples of the mite growth inhibitors affecting CHS1 include clofentezine, diflovidazin, hexythiazox, and etoxazole.

Examples of the microbial disruptors of insect midgut membranes include Bacillus thuringiensis subsp. israelensis, Bacillus thuringiensis subsp. aizawai, Bacillus thuringiensis subsp. kurstaki, Bacillus thuringiensis subsp. tenebrionis, proteins contained in B. t. crops (Cry1Ab, Cry1Ac, Cry1Fa, Cry1A. 105, Cry2Ab, Vip3A, mCry3A, Cry3Bb, Cry34Ab1/Cry35Ab1), and Bacillus sphaericus.

Examples of the inhibitors of mitochondrial ATP synthase include diafenthiuron, azocyclotin, tricyclohexyltin hydroxide (cyhexatin), fenbutatin oxide, propargite (BPPS), and tetradifon.

Examples of the uncouplers of oxidative phosphorylation via disruption of proton gradient include chlorfenapyr, DNOC, and sulfluramid.

Examples of the nicotinic acetylcholine receptor (nAChR) channel blockers include bensultap, cartap hydrochloride, thiocyclam, thiosultap sodium, and monosultap.

Examples of the inhibitors of chitin biosynthesis affecting CHS1 include bistrifluron, chlorfluazuron, diflubenzuron, flucycloxuron, flufenoxuron, hexaflumuron, lufenuron, novaluron, noviflumuron, teflubenzuron, and triflumuron.

Examples of the inhibitors of chitin biosynthesis (type 1) include buprofezin.

Examples of the molting disruptors (Dipteran) include cyromazine.

Examples of the ecdysone receptor agonists include chromafenozide, halofenozide, methoxyfenozide, and tebufenozide.

Examples of the octopamine receptor agonists include amitraz.

Examples of the mitochondrial complex III electron transport inhibitors include hydramethylnon, acequinocyl, fluacrypyrim, flupyroxystrobin, and bifenazate.

Examples of the mitochondrial complex I electron transport inhibitors (METI) include fenazaquin, fenpyroximate, pyridaben, pyrimidifen, tebufenpyrad, tolfenpyrad, and derris (rotenone).

Examples of the voltage-dependent sodium channel blockers include indoxacarb and metaflumizone.

Examples of the inhibitors of acetyl CoA carboxylase include spirodiclofen, spiromesifen, spiropidion, spidoxamat, spirobudifen, and spirotetramat.

Examples of the mitochondrial complex IV electron transport inhibitors include aluminum phosphide, calcium phosphide, phosphine, zinc phosphide, prussic acid (calcium cyanide, sodium cyanide), and potassium cyanide.

Examples of the mitochondrial complex II electron transport inhibitors include cyenopyrafen, cyetpyrafen, cyflumetofen, pyflubumide, and cyclobutrifluram.

Examples of the ryanodine receptor modulators include chlorantraniliprole, cyantraniliprole, cyclaniliprole, flubendiamide, tetraniliprole, fluchlordiniliprole, chlorantraniliprole, tetrachlorantraniliprole, cyhalodiamide, and cyproflanilide.

Examples of the chordotonal organ modulators include flonicamid.

Examples of the GABA-gated chloride channel allosteric modulators include broflanilide, fluxametamide, and isocycloseram.

Examples of the baculoviruses include codling moth (Cydia pomonella) GV, false codling moth (Thaumatotibia leucotreta) GV, velvetbean caterpillar (Anticarsis gemmatalis) MNPV, and cotton bollworm (Helicoverpa armigera) NPV.

Examples of other insecticides, miticides, and nematicides include azadirachtin, benzomate (benzoximate), phenisobromolate (bromopropylate), quinoxaline system (chinomethionate), kelthane (dicofol), lime sulfur, mancozeb, pyridalyl, sulfur, acynonapyr, amidoflumet, benzpyrimoxan, fluazaindolizine, fluensulfone, fluhexafon, flupentiofenox, flometoquin, metaldehyde, tyclopyrazoflor, dimpropyridaz, trifluenfuronate, indazapyroxamet, sulfiflumin, Burkholderia spp., Wolbachia pipientis (Zap), Chenopodium ambrosioides near ambrosioides extracts, fatty acid monoesters with glycerol or propanediol, neem oil, machine oil, rapeseed oil, blended oils (safflower and cottonseed oil), starch, saccharified reduced starch, sodium oleate, ferric phosphate, nemadectin, Beauveria bassiana strains, Metarhizium anisopliae strain (F52), Paecilomyces fumosoroseus Apopka strain (97), diatomaceous earth, dichlorodiisopropyl ether (DCIP), 1,3-dichloropropene (D-D), levamisole hydrochloride, morantel tartrate, and tioxazafen.

Examples of effective components suitable for herbicidal use include acetolactate synthase (ALS) inhibitor compounds, amino acid compounds, cyclohexanedione compounds, acetamide compounds, bipyridinium compounds, allyloxyphenoxypropionic acid compounds, carbamates compounds, pyridine compounds, urea compounds, dinitroaniline compounds, protoporphyrinogen oxidase (PPO) inhibitor compounds, phenoxyacetic acid compounds, hydroxyphenylpyruvate dioxygenase enzyme (HPPD) inhibitor compounds, and triazine compounds.

Examples of the acetolactate synthesis (ALS) inhibitor compounds include imazamethabenz and imazamethabenz-methyl, imazamox, imazapic, imazapyr, imazaquin, imazethapyr, amidosulfuron, azimsulfuron, bensulfuron and bensulfuron-methyl, chlorimuron and chlorimuron-methyl, chlorimuron-ethyl, chlorsulfuron, cinosulfuron, cyclosulfamuron, ethametsulfuron and ethametsulfuron-methyl, ethoxysulfuron, flazasulfuron, flucetosulfuron, flupyrsulfuron, flupyrsulfuron-methyl and salts thereof, foramsulfuron, halosulfuron, halosulfuron-methyl, imazosulfuron, iodosulfuron and salts thereof, iodosulfuron-methyl and salts thereof, mesosulfuron, mesosulfuron-methyl, metazosulfuron, metsulfuron, metsulfuron-methyl, nicosulfuron, oxasulfuron, primisulfuron, primisulfuron-methyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron and salts thereof, triflusulfuron, triflusulfuron-methyl, tritosulfuron, imazamethabenz, bispyribac-sodium, cloransulam, cloransulam-methyl, diclosulam, florasulam, flucarbazone and salts thereof, flumetsulam, metosulam, orthosulfamuron, penoxsulam, pyroxsulam, propoxycarbazone and salts thereof, pyribenzoxim, pyriftalid, pyriminobac-methyl, pyrimisulfan, pyrithiobac and salts thereof, pyroxsulam, thiencarbazone, thiencarbazone-methyl, and triafamone.

Examples of the amino acid compounds include bialaphos and salts thereof, glufosinate and salts thereof, glufosinate P and salts thereof, and glyphosate and salts thereof.

Examples of the cyclohexanedione compounds include alloxydim, butroxydim, clethodim, cloproxydim, cycloxydim, profoxydim, sethoxydim, tepraloxydim, and tralkoxydim.

Examples of the acetamide compounds include napropamide, dimethachlor, pethoxamid, acetochlor, alachlor, allidochlor (CDAA), butenachlor, delachlor, diethatyl-ethyl, propisochlor, prynachlor, butachlor, dimethenamid, dimethenamid-P, metazachlor, metolachlor, S-metolachlor, pretilachlor, propachlor, thenylchlor, flufenacet, and mefenacet.

Examples of the bipyridinium compounds include cyperquat, morfamquat, diquat, and paraquat.

Examples of the allyloxyphenoxypropionic acid compounds include clodinafop, clodinafop-propargyl, clofop, cyhalofop-butyl, diclofop, diclofop-methyl, diclofop-P-methyl, fenoxaprop, fenoxaprop-ethyl, fenoxaprop-P-ethyl, fluazifop, fluazifop-butyl, fluazifop-P-butyl, haloxyfop, haloxyfop-methyl, haloxyfop-P-methyl, isoxapyrifop, metamifop, propaquizafop, quizalofop, quizalofop-ethyl, quizalofop-P-ethyl, and quizalofop-P-tefuryl.

Examples of the carbamate compounds include asulam, carbetamide, desmedipham, chlorprocarb, phenisopham, cycloate, dimepiperate, pebulate, tiocarbazil, vernolate, barban, chlorbufam, chlorpropham, propham, swep, phenmedipham, butylate, EPTC, esprocarb, molinate, orbencarb, prosulfocarb, pyributicarb, thiobencarb (benthiocarb) and tri-allate.

Examples of the pyridine compounds include aminopyralid, clopyralid, diflufenican, dithiopyr, fluridone, fluroxypyr, halauxifen, florpyrauxifen, picloram and salts thereof, picolinafen, thiazopyr, and triclopyr and salts thereof.

Examples of the urea compounds include benzothiazolone, bromuron, buturon, chlorbromuron, chloroxuron, difenoxuron, dimefuron, ethidimuron, fenuron, fluothiuron, metobenzuron, metobromuron, metoxuron, monolinuron, monuron (CMU), neburon, parafluron, siduron, thiazafluron, chlorotoluron, dymron, diuron (DCMU), fluometuron, isoproturon, linuron, methabenzthiazuron, tebuthiuron, cumyluron, karbutilate, and isouron.

Examples of the dinitroaniline compounds include benfluralin (bethrodine), butralin, dinitramine, ethalfluralin, fluchloralin, isopropalin, nitralin, profluralin, oryzalin, pendimethalin, prodiamine, and trifluralin.

Examples of the protoporphyrinogen oxidase (PPO) inhibitor compounds include acifluorfen, aclonifen, azafenidin, bifenox, chlomethoxynil, ethoxyfen, ethoxyfen-ethyl, fomesafen, fluazolate, fluoroglycofen, fluoroglycofen-ethyl, halosafen, lactofen, oxyfluorfen, butafenacil, epyrifenacil, chlornitrofen (CNP), fluorodifen, fluoronitrofen (CFNP), nitrofen (NIP), oxyfluorfen, chlorphthalim, flumipropyn, carfentrazone, carfentrazone-ethyl, cinidon-ethyl, flumiclorac-pentyl, flumioxazin, fluthiacet, fluthiacet-methyl, oxadiargyl, oxadiazon, pentoxazone, pyraclonil, pyraflufen, pyraflufen-ethyl, saflufenacil, sulfentrazone, thidiazimin, benzfendizone, profluazol, and flufenpyr-ethyl.

Examples of the phenoxyacetic acid compound include 2,4,5-T, 2,4-D and salts thereof, 2,4-DB and salts thereof, clomeprop, dichlorprop, fenoprop, MCPA and salts thereof, MCPB and salts thereof, mecoprop (MCPP) and salts thereof, and mecoprop-P and salts thereof.

Examples of the hydroxyphenylpyruvate dioxygenase enzyme (HPPD) inhibitor compounds include benzobicyclon, benzofenap, bicyclopyrone, isoxaflutol, mesotrione, pyrasulfotol, pyrazolynate (pyrazolate), pyrazoxyfen, sulcotrione, tefuryltrione, tembotrione, topramezone, fenquinotrione, and tolpyralate.

Examples of the triazine compound include atraton, aziprotryn, chlorazine, cyprazine, desmetryn, dipropetryn, eglinazine-ethyl, ipazine, methoprotryne, procyazine, proglinazine, prometon, propazine, sebuthylazine, secbumeton, terbumeton, trietazine, ametryn, atrazine, cyanazine, dimethametryn, hexazinone, indaziflam, metamitron, metribuzin, prometryn, simazine (CAT), simetryn, terbuthylazine, terbutryn, and triaziflam.

Examples of other compounds for herbicidal use include amicarbazone, ethiozin, isomethiozin, aminocyclopyrachlor, aminotriazole, anilofos, piperophos, beflubutamid, benazolin, benfuresate, bentazone, bromacil, isocil, bromobutide, bromofenoxim, bromoxynil, butamifos, DMPA, chlorthal-dimethyl (TCTP), cafenstrole, chloridazon (PAC), brompyrazon, chlorthal, clomazone, cumyluron, dicamba (MDBA) and salts thereof, chloramben, 2,3,8-TBA (TCBA), benazolin-ethyl, chlorfenac, chlorfenprop, dichlobenil (DBN), chlorthiamid (DCBN), cinmethylin, methiozolin, amitrol, flamprop-M, fosamine, methyldymron, monalide, MSMA, difenzoquat, diflufenzopyr, endothall and salts thereof, ethofumesate, etobenzanid, fenoxasulfone, fentrazamide, flupoxam, fluorochloridone, flurtamone, indanofan, tridiphane, ioxynil, ipfencarbazone, isoxaben, triaziflam, lenacil, methylarsonic acid, naptalam, flurochloridone, norflurazon, oxaziclomefone, pinoxaden, chloranocryl=dicryl, pentanochlor (CMMP), propanil, propyzamide, pyridate, pyroxasulfone, promacyl, quinclorac, quinmerac, quinoclamine, terbacil, cyclopyrimorate, florpyrauxifen-benzyl, lancotrione and salts thereof, cyclopyranil, bixlozone, tetflupyrolimet, dimesulfazet, dinosam, dinoseb (DNBP), DNOC, dinoterb, etinofen, medinoterb, DSMA, cacodylic acid, diphenamid, naproanilide, tebutam, bensulide, dalapon, TCA, mefluidide, perfluidone, CAMA, tiafenacil, trifludimoxazin, rimisoxafen, fenpyrazone, dioxopyritrione, cypyrafluone, bipyrazone, benquitrione, fluchloraminopyr, pyriflubenzoxim, flufenoximacil, iptriazopyrid, flusulfamide, broclozone, indolauxipyr, icafolin, pyraquinate, tetrapion (flupropanate) and salts thereof, and d-limonene.

### [Method for improving environmental stress tolerance in plant]

The agent for improving environmental stress tolerance in the present embodiment may be used, for example, in cultivated lands such as fields, paddy fields, lawns, and orchards or non-cultivated lands. The agent for improving environmental stress tolerance in the present embodiment can be used by all methods of fertilization, such as foliar application, mixing into water supply, spraying on soil, injecting into subsoil using an injector, seed treatment including treatment of bulbs and tubers, and direct fertilization to plants. Thus, a method for improving environmental stress tolerance in the present embodiment includes a procedure for fertilizing using the above-described agent for improving environmental stress tolerance.

In the case of application by mixing into water supply, for example, water is fed to the crop, or the water surface of a paddy field may be treated with granules or the like. In one example, the concentration of the active ingredient in the feed water is from 0.5 to 500 mg/L, and preferably from 1 to 300 mg/L. The amount of the active ingredient used when administered to paddy water is, for example, from 0.5 to 5000 g, and preferably from 3 to 3000 g per 10a of paddy field.

In the case of application by foliar application or spraying on soil, a planting hole or the vicinity thereof may be treated with granules or the like in the transplantation of seedling or the like, or seeds, plants or the earth around a plant may be treated with granules, a wettable power, or the like. In addition, it may be preferable to mix with soil after spraying on the soil. The amount of the active ingredient used for foliar application or spraying on soil surface is, for example, from 0.5 to 5000 mg, and preferably from 3 to 3000 mg per 1 m² of agricultural and horticultural land.

In seed treatment, the agent is applied to the seeds by mixing and stirring a wettable powder and a dustable powder with the seeds or by dipping the seeds in a diluted wettable powder. Seed treatments also include seed coating treatments. The amount of active ingredients used in the case of seed treatment is, for example, from 0.005 to 10000 g, and preferably from 0.05 to 1000 g per 100 kg of the seeds. Seeds treated with agricultural or horticultural chemicals can be used in the same way as common seeds.

Additionally, since the concentration and amount used differ depending on the form of the agent, time of use, usage method, usage location, target crops and the like, they may be increased or decreased without being limited to the above range. As described above, compound (I) and its tautomer exhibit an excellent environmental stress tolerance improving effect on a wide range of plants.

### [Use of agent for improving environmental stress tolerance]

The agent for improving environmental stress tolerance in the present embodiment exhibits an excellent environmental stress tolerance improving effect in treated plants, as described above.

### [Summary]

As described above, an agent for improving environmental stress tolerance of Aspect 1 according to the present invention includes a compound represented by Formula (I) or its tautomer, or an agronomically acceptable salt thereof as an active ingredient: 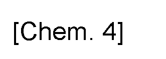 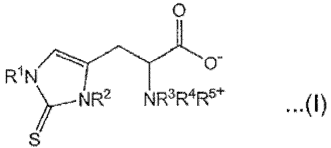 In Formula (I), R¹ and R² each independently represent a hydrogen atom or an alkyl group having from 1 to 4 carbon atoms, and R³ to R⁵ each independently represent an alkyl group having from 1 to 4 carbon atoms.

In an agent for improving environmental stress tolerance in a plant of Aspect 2 according to the present invention, in Aspect 1, the compound represented by Formula (I) is preferably ergothioneine.

An agent for improving environmental stress tolerance in a plant of Aspect 3 according to the present invention, in Aspect 1 or 2, preferably improves tolerance to at least one environmental stress selected from high temperature stress, low temperature stress, freezing stress, salt stress, excessive nutrient stress, drying stress, excessive water stress, ultraviolet stress, weak light stress, and intense light stress.

In an agent for improving environmental stress tolerance in a plant of Aspect 4 according to the present invention, in any one of Aspects 1 to 3, the agent for improving environmental stress tolerance is an agent for improving salt stress tolerance.

In an agent for improving environmental stress tolerance in a plant of Aspect 5 according to the present invention, in any one of Aspects 1 to 3, the agent for improving environmental stress tolerance is an agent for improving drying stress tolerance.

In an agent for improving environmental stress tolerance in a plant of Aspect 6 according to the present invention, in any one of Aspects 1 to 3, the agent for improving environmental stress tolerance is an agent for improving high temperature stress tolerance.

In an agent for improving environmental stress tolerance in a plant of Aspect 7 according to the present invention, in any one of Aspects 1 to 3, the agent for improving environmental stress tolerance is an agent for improving excessive nutrient stress tolerance.

In an agent for improving environmental stress tolerance in a plant of Aspect 8 according to the present invention, in any one of Aspects 1 to 3, the agent for improving environmental stress tolerance is an agent for improving excessive water stress tolerance.

In an agent for improving environmental stress tolerance in a plant of Aspect 9 according to the present invention, in any one of Aspects 1 to 3, the agent for improving environmental stress tolerance is an agent for improving ultraviolet stress tolerance.

In an agent for improving environmental stress tolerance in a plant of Aspect 10 according to the present invention, in any one of Aspects 1 to 3, the agent for improving environmental stress tolerance is an agent for improving intense light stress tolerance.

In an agent for improving environmental stress tolerance in a plant of Aspect 11 according to the present invention, in any one of Aspects 1 to 3, the agent for improving environmental stress tolerance is an agent for improving freezing stress tolerance.

In an agent for improving environmental stress tolerance in a plant of Aspect 12 according to the present invention, in any one of Aspects 1 to 3, the agent for improving environmental stress tolerance is an agent for improving low temperature stress tolerance.

A method for improving environmental stress tolerance in a plant of Aspect 13 according to the present invention includes treating a plant with the agent for improving environmental stress tolerance described in any one of Aspects 1 to 12.

Embodiments of the present invention will be further described in detail using the examples below. Needless to say, the present invention is not limited to the following examples, and details of the present invention can be in various manners. Furthermore, the present invention is not limited to the embodiments described above, and it may be varied in various ways within the scope of the claims. Thus, an embodiment achieved by appropriately combining technical means described herein will be included in the technical scope of the present invention. In addition, the contents of all the literatures referred herein are incorporated herein by reference in their entirety.

### [EXAMPLES]

Hereinafter, the effect of the agent for improving environmental stress tolerance according to the present embodiment will be described using L-(+)-ergothioneine. In the following description, glycine betaine which is a compound different from the agent for improving environmental stress tolerance according to the present embodiment is used as a compound for comparison. In the following description, L-(+)-ergothioneine may be abbreviated as "EGT" and glycine betaine may be abbreviated as "GB".

### [Evaluation Example 1] Comparison of effects on tolerance to salt stress

L-(+)-ergothioneine (Examples 1 and 2 and Comparative Example 3) and glycine betaine (Comparative Examples 1 and 2 and Comparative Example 4) were prepared so as to have the concentrations shown in Table 1 below. EGT and GB were commercially available products, and pure water was used as a solvent.

Three individuals of Arabidopsis thaliana (Col-0) were seeded per well in a 24-well cell culture plate. Mixed salts for Murashige and Skoog medium (Fujifilm Wako Pure Chemical Industries, Ltd.) to which 1 wt.% of sucrose and 0.1 wt.% of agar-agar powder were added was used as a liquid medium, and the liquid medium was placed in a 2 mL per well.

They were located in a growth chamber set at room temperature of 22°C, and the light period was 16 hours and the dark period was 8 hours. The light conditions were set such that the light intensity was 5000 Ix in the central part under irradiation with the fluorescent lamp. On the fourth day after seeding, EGT or GB was added so as to give a predetermined concentration, and 24 hours later, an aqueous sodium chloride solution was added so as to give a final 100 mM concentration, thereby giving a salt stress.

The number of surviving plants was counted on the 10th day after seeding, and the plant mortality rate was evaluated as an index of physiological disorder. The evaluation results are shown in Table 1. The mortality rate and the environmental stress suppressing rate were calculated according to the following formulas. Mortality rate (%) = {1 - (number of surviving plants/number of plants tested)} × 100 Environmental stress suppressing rate (%) = {1 - (mortality rate of test compound-treated group/mortality rate of non-treated group)} × 100

### [Table 1]

**Table 1**

| | Test compound | Test compound concentration | Salt stress | Mortality rate | Environmental stress suppressing rate |
|---|---|---|---|---|---|
| Example 1 | EGT | 1 mM | Yes | 14% | 81% |
| Example 2 | EGT | 0.1 mM | Yes | 39% | 48% |
| Comparative Example 1 | GB | 1 mM | Yes | 75% | 0% |
| Comparative Example 2 | GB | 0.1 mM | Yes | 79% | 0% |
| Comparative Example 3 | EGT | 1 mM | No | 0% | - |
| Comparative Example 4 | GB | 1 mM | No | 0% | - |
| Comparative Example 5 | - | - | Yes | 75% | - |
| Comparative Example 6 | - | - | No | 0% | - |

As shown in Table 1, physiological disorders such as chlorosis were observed in Arabidopsis thaliana plants due to salt stress, 75% of the tested Arabidopsis thaliana plants died (Comparative Example 5), and even with GB treatment, the death due to salt stress was not suppressed (Comparative Examples 1 and 2). In contrast, treatment with EGT resulted in a mortality rate of 14% in 1 mM (Example 1) and 39% in 0.1 mM (Example 2), indicating that the death due to salt stress was suppressed.

### [Evaluation Example 2] Comparison of effects on tolerance to drying stress

EGT (Example 3) was prepared so as to have the concentration shown in Table 2 below. A commercially available EGT was used, and pure water was used as a solvent.

One individual Arabidopsis thaliana (Col-0) was seeded in a plastic pot having a diameter of 60 mm and a height of 55 mm. Plastic deep dishes each having a diameter of 160 mm and a height of 28 mm were prepared, and six pots were respectively placed therein. As soil, 45 mL of vermiculite, 22.5 mL of granular soil (Kumiai horticultural soil), and 22.5 mL of vermiculite were placed in the pot in this order.

They were located in a growth chamber set at room temperature of 22°C, and the light period was 16 hours and the dark period was 8 hours. The light conditions were set such that the light intensity was 5000 Ix in the central part under irradiation with the fluorescent lamp. Water supply was conducted from the bottom, and the water level was set at about 5 mm. EGT in an amount of 50 mL was added on the 22nd day after seeding, and drying stress was applied by stopping water supply for 18 days from 2 days after the addition of EGT.

The number of surviving plants was counted 18 days after the stoppage of water, and the plant mortality rate was evaluated as an index of physiological disorder. The evaluation results are shown in Table 2. The mortality rate and the environmental stress suppressing rate were calculated according to the following formulas. Mortality rate (%) = {1 - (number of surviving plants/number of plants tested)} × 100 Environmental stress suppressing rate (%) = {1 - (mortality rate of test compound-treated group/mortality rate of non-treated group)} × 100

### [Table 2]

**Table 2**

| | Test compound | Test compound concentration | Drying stress | Mortality rate | Environmental stress suppressing rate |
|---|---|---|---|---|---|
| Example 3 | EGT | 1 mM | Yes | 0% | 100% |
| Comparative Example 7 | - | - | Yes | 50% | - |
| Comparative Example 8 | - | - | No | 0% | - |

As shown in Table 2, physiological disorders such as wilting and necrosis were observed in Arabidopsis thaliana plants due to drying stress, and 50% of tested Arabidopsis thaliana plants died (Comparative Example 7), whereas all Arabidopsis thaliana plants survived by treatment with EGT (Example 3).

### [Evaluation Example 3] Comparison of effects on tolerance to drying stress

EGT (Example 4) or GB (Comparative Example 9) was prepared so as to have the concentration shown in Table 3 below. EGT and GB were commercially available products, and pure water was used as a solvent.

In a plastic pot having a diameter of 60 mm and a height of 55 mm, 90 mL of granular soil (Kumiai horticultural soil) was placed, and one individual cotton (manufactured by TOHOKU SEED CO., LTD.) was seeded per pot.

They were managed in a greenhouse set at room temperature of 25°C. EGT in an amount of 50 mL or GB in an amount of 50 mL was added on the 23rd day after seeding, and drying stress was applied by stopping water supply for 4 days after 4 days from the addition of EGT or GB.

The leaves were collected 4 days after the stoppage of water and photographed with a digital camera. The photographed pictures of the leaves were analyzed with image analysis software WinROOF (manufactured by MITANI Corporation) to quantify the total leaf area and the green leaf area.

Using the above-described total leaf area and green leaf area, the leaf necrotizing rate after 4 days from the stoppage of water was evaluated. The evaluation results are shown in Table 3. The leaf necrotizing rate and the environmental stress suppressing rate were calculated according to the following formulas. Leaf necrotizing rate (%) = {1 - (green leaf area/total leaf area)} × 100 Environmental stress suppressing rate (%) = {1 - (leaf necrotizing rate of test compound-treated group/leaf necrotizing rate of non-treated group)} × 100

### [Table 3]

**Table 3**

| | Test compound | Test compound concentration | Drying stress | Leaf necrotizing rate | Environmental stress suppressing rate |
|---|---|---|---|---|---|
| Example 4 | EGT | 0.1 mM | Yes | 26% | 50% |
| Comparative Example 9 | GB | 0.1 mM | Yes | 68% | 0% |
| Comparative Example 10 | - | - | Yes | 52% | - |
| Comparative Example 11 | - | - | No | 0% | - |

As shown in Table 3, physiological disorders such as wilting, chlorosis, and necrosis were observed in cotton plants due to drying stress, 52% of the tested cotton plant leaves necrotized (Comparative Example 10), and even with GB treatment, the necrotizing due to drying stress was not suppressed (Comparative Example 9). In contrast, with EGT treatment, the necrotizing rate due to drying stress was suppressed to 26% (Example 4).

### [Evaluation Example 4] Comparison of effects on tolerance to high temperature stress

EGT (Example 5 and Comparative Example 13) or GB (Comparative Example 12 and Comparative Example 14) was prepared so as to have a concentration shown in Table 4 below. EGT and GB were commercially available products, and pure water was used as a solvent.

In a plastic pot having a diameter of 60 mm and a height of 55 mm, 80 mL of culture soil (manufactured by Hanagokoro Co., Ltd.) was put, and one individual Arabidopsis thaliana (Col-0) was seeded per pot. Plastic deep dishes each having a diameter of 160 mm and a height of 28 mm were prepared, and four pots were respectively placed therein.

They were located in a growth chamber set at room temperature of 22°C, and the light period was 16 hours and the dark period was 8 hours. The light conditions were set such that the light intensity was 5000 Ix in the central part under irradiation with the fluorescent lamp. Water supply was conducted from the bottom, and the water level was set at about 5 mm. On the 41st day after seeding, 50 mL of EGT or 50 mL of GB was added, and one day after that, high temperature stress was applied by exposure to an environment of 42°C for 3 hours.

The surviving plants were counted 12 days after the high temperature stress was applied, and the plant mortality rate was evaluated as an index of physiological disorder. The evaluation results are shown in Table 4. The mortality rate and the environmental stress suppressing rate were calculated according to the following formulas. Mortality rate (%) = {1 - (number of surviving plants/number of plants tested)} × 100 Environmental stress suppressing rate (%) = {1 - (mortality rate of test compound-treated group/mortality rate of non-treated group)} × 100

### [Table 4]

**Table 4**

| | Test compound | Test compound concentration | High temperature stress | Mortality rate | Environmental stress suppressing rate |
|---|---|---|---|---|---|
| Example 5 | EGT | 0.5 mM | Yes | 25% | 67% |
| Comparative Example 12 | GB | 0.5 mM | Yes | 75% | 0% |
| Comparative Example 13 | EGT | 0.5 mM | No | 0% | - |
| Comparative Example 14 | GB | 0.5 mM | No | 0% | - |
| Comparative Example 15 | - | - | Yes | 75% | - |
| Comparative Example 16 | - | - | No | 0% | - |

As shown in Table 4, physiological disorders such as wilting and necrosis were observed in Arabidopsis thaliana plants due to high temperature stress, 75% of the tested Arabidopsis thaliana plants died (Comparative Example 15), and even with GB treatment, the mortality rate due to high temperature stress was not suppressed (Comparative Example 12). In contrast, with EGT treatment, the mortality rate due to high temperature stress was suppressed to 25% (Example 5).

### [Evaluation Example 5] Comparison of effects on tolerance to excessive nutrient stress

EGT (Example 6) or GB (Comparative Example 17) was prepared so as to have a concentration shown in Table 5 below. EGT and GB were commercially available products, and pure water was used as a solvent.

One individual Arabidopsis thaliana (Col-0) was seeded in a plastic pot having a diameter of 60 mm and a height of 55 mm. Plastic deep dishes each having a diameter of 160 mm and a height of 28 mm were prepared, and four pots were respectively placed therein. As soil, 45 mL of vermiculite, 22.5 mL of granular soil (Kumiai horticultural soil), and 22.5 mL of vermiculite were placed in the pot in this order.

They were located in a growth chamber set at room temperature of 22°C, and the light period was 16 hours and the dark period was 8 hours. The light conditions were set such that the light intensity was 5000 Ix in the central part under irradiation with the fluorescent lamp. Water supply was conducted from the bottom, and the water level was set at about 5 mm. On the 61st day after seeding, 50 mL of EGT or 50 mL of GB was added, and one day after that, a liquid fertilizer (HYPONeX, manufactured by Hyponex Japan Corp., Ltd.) was applied at a 5-fold dilution to give excessive nutrient stress.

The number of wilted leaves was evaluated one day after the excessive nutrient stress was applied. The evaluation results are shown in Table 5. The leaf wilting rate and the environmental stress suppressing rate were calculated according to the following formulas. Leaf wilting rate (%) = (number of wilted leaves/total number of leaves of plants tested) × 100 Environmental stress suppressing rate (%) = {1 - (wilting rate of test compound-treated group/wilting rate of non-treated group)} × 100

### [Table 5]

**Table 5**

| | Test compound | Test compound concentration | Excessive nutrient stress | Leaf wilting rate | Environmental stress suppressing rate |
|---|---|---|---|---|---|
| Example 6 | EGT | 0.5 mM | Yes | 24% | 76% |
| Comparative Example 17 | GB | 0.5 mM | Yes | 89% | 11% |
| Comparative Example 18 | - | - | Yes | 100% | - |
| Comparative Example 19 | - | - | No | 0% | - |

As shown in Table 5, the physiological disorder of wilting was observed in 100% of the leaves of Arabidopsis thaliana plants subjected to excessive nutrient stress (Comparative Example 18), and even with GB treatment, the wilting rate due to excessive nutrient stress was hardly suppressed (Comparative Example 17). In contrast, the EGT-treated Arabidopsis thaliana leaves (Example 6) showed a lower wilting rate than the GB-treated Arabidopsis thaliana leaves, and leaf wilting due to excessive nutrient stress was suppressed.

### [Evaluation Example 6] Comparison of effects on tolerance to drying stress

EGT (Examples 7 and 8) or GB (Comparative Examples 20 and 21) was prepared so as to have the concentration shown in Table 6 below. EGT and GB were commercially available products, and pure water was used as a solvent.

In a 60 mm square plastic pot having a height of 66 mm, 150 mL of granular soil (Kumiai horticultural soil) was placed, and one individual soybean plant was seeded per pot.

They were managed in a greenhouse set at room temperature of 25°C. EGT in an amount of 50 mL or GB in an amount of 50 mL was added on the 23rd day after seeding, and drying stress was applied by stopping water supply for 7 days after the addition of EGT or GB.

Dead leaves were counted 7 days after the stoppage of water, and the leaf mortality rate was evaluated as an index of physiological disorder. The evaluation results are shown in Table 6. The leaf mortality rate and the environmental stress suppressing rate were calculated according to the following formulas. Leaf mortality rate (%) = (number of dead leaves/total number of leaves of tested plants) × 100 Environmental stress suppressing rate (%) = {1 - (leaf mortality rate of test compound-treated group/leaf mortality rate of non-treated group)} × 100

### [Table 6]

**Table 6**

| | Test compound | Test compound concentration | Drying stress | Leaf mortality rate | Environmental stress suppressing rate |
|---|---|---|---|---|---|
| Example 7 | EGT | 1 mM | Yes | 38% | 39% |
| Example 8 | EGT | 0.1 mM | Yes | 55% | 11% |
| Comparative Example 20 | GB | 1 mM | Yes | 62% | 0% |
| Comparative Example 21 | GB | 0.1 mM | Yes | 71% | 0% |
| Comparative Example 22 | - | - | Yes | 62% | - |
| Comparative Example 23 | - | - | No | 0% | - |

As shown in Table 6, physiological disorders such as leaf wilting and necrosis were observed in soybean plants due to drying stress, 62% of the tested soybean plant leaves died (Comparative Example 22), and even with GB treatment, the mortality rate due to drying stress was not suppressed (Comparative Examples 20 and 21). In contrast, with EGT treatment, the mortality rate due to drying stress was suppressed to 55% in 0.1 mM (Example 8) and 38% in 1.0 mM (Example 7).

### [Evaluation Example 7] Comparison of effects on tolerance to drying stress

EGT (Example 9) or GB (Comparative Example 24) was prepared so as to have the concentration shown in Table 7 below. EGT and GB were commercially available products, and pure water was used as a solvent.

In a plastic pot having a diameter of 135 mm and a height of 110 mm, 1 kg of granular soil (Kumiai horticultural soil) was placed, and 5 individual radish (Akamaru Hatsuka) was seeded per pot.

They were managed in a greenhouse set at room temperature of 25°C. EGT in an amount of 50 mL or GB in an amount of 50 mL was added on the 22nd day after seeding, and water supply was stopped for 7 days. After cultivation under water supply for 7 days, drying stress was applied by stopping water supply for 7 days again.

The dead leaves of radish were counted after the drying stress was applied, and the leaf mortality rate was evaluated as an index of physiological disorder. The evaluation results are shown in Table 7. The leaf mortality rate and the environmental stress suppressing rate were calculated according to the following formulas. Leaf mortality rate (%) = (number of dead leaves/total number of leaves of tested plants) × 100 Environmental stress suppressing rate (%) = {1 - (leaf mortality rate of test compound-treated group/leaf mortality rate of non-treated group)} × 100

### [Table 7]

**Table 7**

| | Test compound | Test compound concentration | Drying stress | Leaf mortality rate | Environmental stress suppressing rate |
|---|---|---|---|---|---|
| Example 9 | EGT | 0.5 mM | Yes | 17% | 71% |
| Comparative Example 24 | GB | 0.5 mM | Yes | 73% | 0% |
| Comparative Example 25 | - | - | Yes | 59% | - |
| Comparative Example 26 | - | - | No | 0% | - |

As shown in Table 7, physiological disorders such as leaf wilting and necrosis were observed in radish plants due to drying stress, 59% of the tested radish leaves died (Comparative Example 25), and even with GB treatment, the mortality rate due to drying stress was not suppressed (Comparative Example 24). In contrast, with EGT treatment, the mortality rate due to drying stress was suppressed to 17% (Example 9).

### [Evaluation Example 8] Comparison of effects on tolerance to drying stress

EGT (Example 10) or GB (Comparative Example 27) was prepared so as to have a concentration shown in Table 8 below. EGT and GB were commercially available products, and pure water was used as a solvent.

In a plastic pot having a diameter of 135 mm and a height of 110 mm, 1 L of a raising seedling culture soil (manufactured by Kanetaki Co., Ltd.) was placed, and 100 mm square of turf (Manila grass) was planted per pot.

They were managed in a greenhouse set at room temperature of 25°C. 12.5 mL of EGT or 12.5 mL of GB was added about one month after planting, and water supply was stopped for 7 days thereafter. After cultivation under water supply for 7 days, drying stress was applied by stopping water supply for 7 days again.

The dead leaves of turf to which the drying stress was applied were counted, and the leaf mortality rate was evaluated as an index of physiological disorder. The evaluation results are shown in Table 8. The leaf mortality rate and the environmental stress suppressing rate were calculated according to the following formulas. Leaf mortality rate (%) = (number of dead leaves/total number of leaves of tested plants) × 100 Environmental stress suppressing rate (%) = {1 - (leaf mortality rate of test compound-treated group/leaf mortality rate of non-treated group)} × 100

### [Table 8]

**Table 8**

| | Test compound | Test compound concentration | Drying stress | Leaf mortality rate | Environmental stress suppressing rate |
|---|---|---|---|---|---|
| Example 10 | EGT | 0.1 mM | Yes | 35% | 65% |
| Comparative Example 27 | GB | 0.1 mM | Yes | 100% | 0% |
| Comparative Example 28 | - | | Yes | 100% | - |
| Comparative Example 29 | - | | | 0% | - |

As shown in Table 8, physiological disorders such as necrosis were observed in turf plants due to drying stress, 100% of the tested turf leaves died (Comparative Example 28), and even with GB treatment, the mortality rate due to drying stress was not suppressed (Comparative Example 27). In contrast, with EGT treatment, the mortality rate due to drying stress was suppressed to 35% (Example 10).

### [Evaluation Example 9] Comparison of effects on tolerance to excessive water stress

EGT (Example 11, Comparative Example 31) or GB (Comparative Examples 30 and 32) was prepared so as to have a concentration shown in Table 9 below. EGT and GB were commercially available products, and pure water was used as a solvent.

5 mL of pure water was added to 9-cm petri dishes on which filter paper was placed, and 12 rapeseed seeds were seeded per petri dish. They were located in a growth chamber set at room temperature of 22°C, and the light period was 16 hours and the dark period was 8 hours. The light conditions were set such that the light intensity was 5000 Ix in the central part under irradiation with the fluorescent lamp.

On the sixth day after seeding, pure water in the petri dish was removed, 5 mL of EGT or 5 mL of GB was added to the petri dish, and one day after that, 50 mL of pure water was added to the petri dish to apply excessive water stress.

The surviving plants were counted 19 days after the excessive water stress was applied, and the mortality rate of the plants was evaluated as an index of physiological disorder. The evaluation results are shown in Table 9. The mortality rate and the environmental stress suppressing rate were calculated according to the following formulas. Mortality rate (%) = {1 - (number of surviving plants/number of plants tested)} × 100 Environmental stress suppressing rate (%) = {1 - (mortality rate of test compound-treated group/mortality rate of non-treated group)} × 100

### [Table 9]

**Table 9**

| | Test compound | Test compound concentration | Excessive water stress | Mortality rate | Environmental stress suppressing rate |
|---|---|---|---|---|---|
| Example 11 | EGT | 0.1 mM | Yes | 25% | 58% |
| Comparative Example 30 | GB | 0.1 mM | Yes | 60% | 0% |
| Comparative Example 31 | EGT | 0.1 mM | No | 0% | - |
| Comparative Example 32 | GB | 0.1 mM | No | 0% | - |
| Comparative Example 33 | - | - | Yes | 60% | - |
| Comparative Example 34 | - | - | No | 0% | - |

As shown in Table 9, physiological disorders such as chlorosis were observed in rapeseed plants due to excessive water stress, 60% of the tested rapeseed plants died (Comparative Example 33), and even with GB treatment, the mortality rate due to excessive water stress was not suppressed (Comparative Example 30). In contrast, with EGT treatment, the mortality rate due to excessive water stress was suppressed to 25% (Example 11).

### [Evaluation Example 10] Comparison of effects on tolerance to ultraviolet stress

EGT (Examples 12 and 13, Comparative Examples 37 and 38) or GB (Comparative Examples 35, 36, 39, and 40) was prepared so as to have a concentration shown in Table 10 below. EGT and GB were commercially available products, and pure water was used as a solvent.

5 mL of pure water was added to 9-cm petri dishes on which filter paper was placed, and 10 wheat seeds were seeded per petri dish. They were located in a growth chamber set at room temperature of 22°C, and the light period was 16 hours and the dark period was 8 hours. The light conditions were set such that the light intensity was 5000 Ix in the central part under irradiation with the fluorescent lamp.

On the 7th day after seeding, pure water in the petri dish was removed, 5 mL of EGT or 5 mL of GB was added to the petri dish, and one day after that, ultraviolet stress was applied by exposure for one hour under irradiation with an ultraviolet lamp (GL-15, manufactured by Toshiba Corporation) with the intensity of ultraviolet radiation of a wavelength of 254 nm set to 550 µW/cm⁻².

The dead leaves were counted 6 days after the ultraviolet stress was applied, and the leaf mortality rate was evaluated as an index of physiological disorder. The evaluation results are shown in Table 10. The leaf mortality rate and the environmental stress suppressing rate were calculated according to the following formulas. Leaf mortality rate (%) = (number of dead leaves/total number of leaves of tested plants) × 100 Environmental stress suppressing rate (%) = {1 - (leaf mortality rate of test compound-treated group/leaf mortality rate of non-treated group)} × 100

### [Table 10]

**Table 10**

| | Test compound | Test compound concentration | Ultraviolet stress | Leaf mortality rate | Environmental stress suppressing rate |
|---|---|---|---|---|---|
| Example 12 | EGT | 1 mM | Yes | 23% | 57% |
| Example 13 | EGT | 0.1 mM | Yes | 34% | 36% |
| Comparative Example 35 | GB | 1 mM | Yes | 44% | 17% |
| Comparative Example 36 | GB | 0.1 mM | Yes | 50% | 6% |
| Comparative Example 37 | EGT | 1 mM | No | 0% | - |
| Comparative Example 38 | EGT | 0.1 mM | No | 1% | - |
| Comparative Example 39 | GB | 1 mM | No | 0% | - |
| Comparative Example 40 | GB | 0.1 mM | No | 5% | - |
| Comparative Example 41 | - | - | Yes | 53% | - |
| Comparative Example 42 | - | - | No | 0% | - |

As shown in Table 10, physiological disorders such as chlorosis were observed in wheat plants due to ultraviolet stress, 53% of the tested wheat plants died (Comparative Example 41), and even with GB treatment, the mortality rate due to ultraviolet stress was hardly suppressed (Comparative Examples 35 and 36). In contrast, the mortality rate of wheat plants treated with EGT was lower than that of wheat plants treated with GB, and the mortality rate due to ultraviolet stress was suppressed to 34% in 0.1 mM (Example 13) and to 23% in 1.0 mM (Example 12).

### [Evaluation Example 11] Comparison of effects on tolerance to ultraviolet stress

EGT (Examples 14 and 15, Comparative Examples 45 and 46) or GB (Comparative Examples 43, 44, 47 and 48) was prepared so as to have a concentration shown in Table 11 below. EGT and GB were commercially available products, and pure water was used as a solvent.

Turf (Manila grass) cut into a 50 mm square was placed on a petri dish and managed in a greenhouse at room temperature of 25°C. The plant height was trimmed to the length of 10 mm. 10 mL of EGT or 10 mL of GB was added per petri dish, and one day after that, ultraviolet stress was applied by exposure for one hour under irradiation with an ultraviolet lamp (GL-15, manufactured by Toshiba Corporation) with the intensity of ultraviolet radiation of a wavelength of 254 nm set to 525 µW/cm⁻².

Dead leaves were counted 7 days after the ultraviolet stress was applied, and the leaf mortality rate was evaluated as an index of physiological disorder. The evaluation results are shown in Table 11. The leaf mortality rate and the environmental stress suppressing rate were calculated according to the following formulas. Leaf mortality rate (%) = (number of dead leaves/total number of leaves of tested plants) × 100 Environmental stress suppressing rate (%) = {1 - (leaf mortality rate of test compound-treated group/leaf mortality rate of non-treated group)} × 100

### [Table 11]

**Table 11**

| | Test compound | Test compound concentration | Ultraviolet stress | Leaf mortality rate | Environmental stress suppressing rate |
|---|---|---|---|---|---|
| Example 14 | EGT | 1 mM | Yes | 6% | 90% |
| Example 15 | EGT | 0.1 mM | Yes | 13% | 79% |
| Comparative Example 43 | GB | 1 mM | Yes | 59% | 6% |
| Comparative Example 44 | GB | 0.1 mM | Yes | 54% | 14% |
| Comparative Example 45 | EGT | 1 mM | No | 0% | - |
| Comparative Example 46 | EGT | 0.1 mM | No | 2% | - |
| Comparative Example 47 | GB | 1 mM | No | 0% | - |
| Comparative Example 48 | GB | 0.1 mM | No | 2% | - |
| Comparative Example 49 | - | - | Yes | 63% | - |
| Comparative Example 50 | - | - | No | 0% | - |

As shown in Table 11, physiological disorders such as chlorosis were observed in turf plants due to ultraviolet stress, 63% of the tested turf leaves died (Comparative Example 49), and even with GB treatment, the mortality rate due to ultraviolet stress was hardly suppressed (Comparative Examples 43 and 44). In contrast, the mortality rate of the turf treated with EGT was lower than that of the turf plants treated with GB, and the mortality rate due to ultraviolet stress was suppressed to 13% in 0.1 mM (Example 15) and 6% in 1.0 mM (Example 14).

### [Evaluation Example 12] Comparison of effects on tolerance to intense light stress

EGT (Example 16) or GB (Comparative Example 51) was prepared so as to have a concentration shown in Table 12 below. EGT and GB were commercially available products, and pure water was used as a solvent.

In a plastic pot having a diameter of 60 mm and a height of 55 mm, 90 mL of culture soil (manufactured by Hanagokoro Co., Ltd.) was placed, and 4 individual Arabidopsis thaliana (Col-0) were seeded per pot.

They were located in a growth chamber set at room temperature of 22°C, and the light period was 16 hours and the dark period was 8 hours. The light conditions were set such that the light intensity was 5000 Ix in the central part under irradiation with the fluorescent lamp. 12.5 mL of EGT or 12.5 mL of GB was added on the 43rd day after seeding, and one day after that, intense light stress was applied by exposure for 24 hours under irradiation of LED light (manufactured by Esbaybulbs Co., Ltd.) with a light intensity set to 2000 µmol/m⁻²/sec.

Whitened leaves of Arabidopsis thaliana subjected to intense light stress were counted, and the leaf whitening rate was evaluated as an index of physiological disorder. The evaluation results are shown in Table 12. The leaf whitening rate and the environmental stress suppressing rate were calculated according to the following formulas. Leaf whitening rate (%) = (number of leaves whitened/total number of leaves of plants tested) × 100 Environmental stress suppressing rate (%) = {1 - (leaf whitening rate of test compound-treated group/leaf whitening rate of non-treated group)} × 100

### [Table 12]

**Table 12**

| | Test compound | Test compound concentration | Intense light stress | Leaf whitening rate | Environmental stress suppressing rate |
|---|---|---|---|---|---|
| Example 16 | EGT | 0.1 mM | Yes | 8% | 78% |
| Comparative Example 51 | GB | 0.1 mM | Yes | 40% | 0% |
| Comparative Example 52 | - | - | Yes | 37% | - |
| Comparative Example 53 | - | - | No | 0% | - |

As shown in Table 12, physiological disorders such as chlorosis were observed in Arabidopsis thaliana due to intense light stress, 37% of the tested Arabidopsis thaliana leaves were whitened (Comparative Example 52), and even with GB treatment, the leaf whitening due to intense light stress was not suppressed (Comparative Example 51). In contrast, with EGT treatment, the leaf whitening rate due to intense light stress was suppressed to 8% (Example 16).

### [Evaluation Example 13] Comparison of effects on tolerance to freezing stress

EGT (Example 17, Comparative Example 55) or GB (Comparative Examples 54 and 56) was prepared so as to have the concentration shown in Table 13 below. EGT and GB were commercially available products, and pure water was used as a solvent.

5 mL of pure water was added to 9-cm petri dishes on which filter paper was placed, and 10 broccoli seeds were seeded per petri dish. They were located in a growth chamber set at room temperature of 22°C, and the light period was 16 hours and the dark period was 8 hours. The light conditions were set such that the light intensity was 5000 Ix in the central part under irradiation with the fluorescent lamp.

On the 6th day after seeding, pure water in the petri dish was removed, and then, 5 mL of EGT or 5 mL of GB was added to the petri dish, and freezing stress was applied by, 14 days after the addition, a first exposure to an environment of -20°C for 20 minutes, and, 1 day after the first exposure, a second exposure to an environment of -20°C for 20 minutes.

The surviving plants were counted 24 hours after the freezing stress was applied, and the mortality rate of the plants was evaluated as an index of physiological disorder. The evaluation results are shown in Table 13. The mortality rate and the environmental stress suppressing rate were calculated according to the following formulas. Mortality rate (%) = {1 - (number of surviving plants/number of plants tested)} × 100 Environmental stress suppressing rate (%) = {1 - (mortality rate of test compound-treated group/mortality rate of non-treated group)} × 100

### [Table 13]

**Table 13**

| | Test compound | Test compound concentration | Freezing stress | Mortality rate | Environmental stress suppressing rate |
|---|---|---|---|---|---|
| Example 17 | EGT | 0.1 mM | Yes | 38% | 56% |
| Comparative Example 54 | GB | 0.1 mM | Yes | 100% | 0% |
| Comparative Example 55 | EGT | 0.1 mM | No | 0% | - |
| Comparative Example 56 | GB | 0.1 mM | No | 0% | - |
| Comparative Example 57 | - | - | Yes | 86% | - |
| Comparative Example 58 | - | - | No | 0% | - |

As shown in Table 13, physiological disorders such as stalk breakage and necrosis were observed in broccoli plants due to freezing stress, 86% of the tested broccoli plants died (Comparative Example 57), and even with GB treatment, the mortality rate due to freezing stress was not suppressed (Comparative Example 54). In contrast, with EGT treatment, the mortality rate due to freezing stress was suppressed to 38% (Example 17).

### [Evaluation Example 14] Comparison of effects on tolerance to freezing stress

EGT (Example 18, Comparative Example 60) or GB (Comparative Examples 59 and 61) was prepared so as to have the concentration shown in Table 14 below. EGT and GB were commercially available products, and pure water was used as a solvent.

5 mL of pure water was added to 9-cm petri dishes on which filter paper was placed, and 10 seeds of strawberry (wild strawberry) were seeded per dish. They were located in a growth chamber set at room temperature of 22°C, and the light period was 16 hours and the dark period was 8 hours. The light conditions were set such that the light intensity was 5000 Ix in the central part under irradiation with the fluorescent lamp.

On the 15th day after seeding, pure water in the petri dish was removed, and then 5 mL of EGT or 5 mL of GB was added, and 9 days after that, freezing stress was applied by exposure to an environment of -20°C for 20 minutes.

The surviving plants were counted 3 days after the freezing stress was applied, and the mortality rate of the plants was evaluated as an index of physiological disorder. The evaluation results are shown in Table 14. The mortality rate and the environmental stress suppressing rate were calculated according to the following formulas. Mortality rate (%) = {1 - (number of surviving plants/number of plants tested)} × 100 Environmental stress suppressing rate (%) = {1 - (mortality rate of test compound-treated group/mortality rate of non-treated group)} × 100

### [Table 14]

**Table 14**

| | Test compound | Test compound concentration | Freezing stress | Mortality rate | Environmental stress suppressing rate |
|---|---|---|---|---|---|
| Example 18 | EGT | 0.1 mm | Yes | 29% | 54% |
| Comparative Example 59 | GB | 0.1 mm | Yes | 63% | 0% |
| Comparative Example 60 | EGT | 0.1 mm | No | 0% | - |
| Comparative Example 61 | GB | 0.1 mm | No | 0% | - |
| Comparative Example 62 | - | - | Yes | 63% | - |
| Comparative Example 63 | - | - | No | 0% | - |

As shown in Table 14, physiological disorders such as necrosis were observed due to freezing stress, 63% of the tested strawberry plants died (Comparative Example 62), and even with GB treatment, the mortality rate due to freezing stress was not suppressed (Comparative Example 59). In contrast, with EGT treatment, the mortality rate due to freezing stress was suppressed to 29% (Example 18).

### [Evaluation Example 15] Comparison of effects on tolerance to low temperature stress

EGT (Examples 19 and 20, Comparative Examples 66 and 67) or GB (Comparative Example 64, 65, 68 and 69) was prepared so as to have a concentration shown in Table 15 below. EGT and GB were commercially available products, and pure water was used as a solvent.

1 mL of pure water was added to 3.5-cm petri dishes on which filter paper was placed, and 5 agrugula seeds were seeded per petri dish. They were located in a growth chamber set at room temperature of 22°C, and the light period was 16 hours and the dark period was 8 hours. The light conditions were set such that the light intensity was 5000 Ix in the central part under irradiation with the fluorescent lamp.

On the 4th day after seeding, pure water in the petri dish was removed, and then 1 mL of EGT or 1 mL of GB was added, and 24 hours after that, low temperature stress was applied by exposure to an environment of 4°C for 48 hours.

The number of wilted agrugula leaves was evaluated 3 days after the low temperature stress was applied. The evaluation results are shown in Table 15. The leaf wilting rate and the environmental stress suppressing rate were calculated according to the following formulas. Leaf wilting rate (%) = (number of wilted leaves/total number of leaves of plants tested) × 100 Environmental stress suppressing rate (%) = {1 - (leaf wilting rate of test compound-treated group/leaf wilting rate of non-treated group)} × 100

### [Table 15]

**Table 15**

| | Test compound | Test compound concentration | Low temperature stress | Leaf wilting rate | Environmental stress suppressing rate |
|---|---|---|---|---|---|
| Example 19 | EGT | 1 mM | Yes | 0% | 100% |
| Example 20 | EGT | 0.1 mM | Yes | 0% | 100% |
| Comparative Example 64 | GB | 1 mM | Yes | 60% | 10% |
| Comparative Example 65 | GB | 0.1 mM | Yes | 60% | 10% |
| Comparative Example 66 | EGT | 1 mM | No | 0% | - |
| Comparative Example 67 | EGT | 0.1 mM | No | 0% | - |
| Comparative Example 68 | GB | 1 mM | No | 0% | - |
| Comparative Example 69 | GB | 0.1 mM | No | 0% | - |
| Comparative Example 70 | - | - | Yes | 67% | - |
| Comparative Example 71 | - | - | No | 0% | - |

As shown in Table 15, the physiological disorder of wilting was observed in 67% of the agrugula leaves subjected to low temperature stress (Comparative Example 70), and even with GB treatment, the leaf wilting rate due to low temperature stress was hardly suppressed (Comparative Examples 64 and 65). In contrast, with EGT treatment, the leaf wilting rate due to low temperature stress was suppressed to 0% (Examples 19 and 20).

## Claims

1. An agent for improving environmental stress tolerance in a plant, the agent comprising a compound represented by Formula (I) or its tautomer, or an agronomically acceptable salt thereof as an active ingredient: 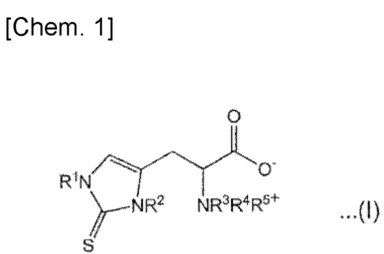 where in Formula (I), R¹ and R² each independently represent a hydrogen atom or an alkyl group having from 1 to 4 carbon atoms, and R³ to R⁵ each independently represent an alkyl group having from 1 to 4 carbon atoms.

2. The agent for improving environmental stress tolerance according to claim 1, wherein the compound represented by Formula (I) is ergothioneine.

3. The agent for improving environmental stress tolerance according to claim 1, wherein the agent improves tolerance to at least one environmental stress selected from high temperature stress, low temperature stress, freezing stress, salt stress, excessive nutrient stress, drying stress, excessive water stress, ultraviolet stress, weak light stress, and intense light stress.

4. The agent for improving environmental stress tolerance according to claim 1, wherein the agent for improving environmental stress tolerance is an agent for improving salt stress tolerance.

5. The agent for improving environmental stress tolerance according to claim 1, wherein the agent for improving environmental stress tolerance is an agent for improving drying stress tolerance.

6. The agent for improving environmental stress tolerance according to claim 1, wherein the agent for improving environmental stress tolerance is an agent for improving high temperature stress tolerance.

7. The agent for improving environmental stress tolerance according to claim 1, wherein the agent for improving environmental stress tolerance is an agent for improving excessive nutrient stress tolerance.

8. The agent for improving environmental stress tolerance according to claim 1, wherein the agent for improving environmental stress tolerance is an agent for improving excessive water stress tolerance.

9. The agent for improving environmental stress tolerance according to claim 1, wherein the agent for improving environmental stress tolerance is an agent for improving ultraviolet stress tolerance.

10. The agent for improving environmental stress tolerance according to claim 1, wherein the agent for improving environmental stress tolerance is an agent for improving intense light stress tolerance.

11. The agent for improving environmental stress tolerance according to claim 1, wherein the agent for improving environmental stress tolerance is an agent for improving freezing stress tolerance.

12. The agent for improving environmental stress tolerance according to claim 1, wherein the agent for improving environmental stress tolerance is an agent for improving low temperature stress tolerance.

13. A method for improving environmental stress tolerance in a plant, the method comprising treating a plant with the agent for improving environmental stress tolerance described in any one of claims 1 to 12.
